# EUROPEAN PATENT APPLICATION

(11) **EP 3 875 552 A1**
(43) Date of publication of application: **08.09.2021**
(21) Application number: 20161001.1
(22) Date of filing: 04.03.2020
(51) Int. Cl.: C09D 11/023, C09D 11/101, C09D 11/102, C09D 4/06

(54) **PHOTOINITIATOR EMULSIONS**

(71) Applicant: Lambson Limited, Wetherby, Yorkshire LS22 7NS (GB)
(72) Inventor: PLENDERLEITH, Richard, Wetherby, West Yorkshire LS22 7NS (GB); SQUIRES, Kelly, Wetherby, West Yorkshire LS22 7NS (GB); DE LEONARDIS, Piero, Wetherby, West Yorkshire LS22 7NS (GB)
(74) Representative: Arkema Patent

(57) **Abstract**

The invention relates to an aqueous emulsion of a concentrated liquid blend of two or more phosphine oxide photoinitiators, in particular to blends comprising photoinitiators with differing activation mechanisms. These blends may be used in radiation curable compositions comprising an ethylenically unsaturated compound or an unsaturated polymer dispersion or emulsion to obtain a coating, ink, lacquer, varnish, sealant, adhesive, molded article or 3D printed article.

## Description

### Field of the Invention

The invention relates to an aqueous emulsion of a concentrated liquid blend of two or more phosphine oxide photoinitiators, in particular to blends comprising photoinitiators with differing activation mechanisms. These blends may be used in radiation curable compositions comprising an ethylenically unsaturated compound or an unsaturated polymer dispersion or emulsion to obtain a coating, ink, lacquer, varnish, sealant, adhesive, molded article or 3D printed article.

### Background of the Invention

Radiation curable compositions containing ethylenically unsaturated compounds can be polymerised by exposure to radiation, such as ultraviolet (UV) light. For rapid and effective curing, a photoinitiator is often used. The photoinitiator forms radical species upon irradiation with photons and initiates free-radical polymerisation of unsaturated groups, leading to hardening (curing) of the material.

Photoinitiators are generally divided into two classes, depending upon their mode of action. Radical photoinitiators and cationic photoinitiators. Cationic Photoinitiators are often salts, for instance iodonium and sulfonium salts. When these salts are irradiated, for example with UV-light, they undergo homolytic bond cleavage forming radicals that react with a proton donor to give a Brønsted or Lewis acid. The generated acid then initiates the polymerization. Radical photoinitiators can adopt two different modes of action, and are classified by mode of action as Norrish Type I and Norrish Type II Photoinitiators. Norrish Type I photoinitiators cleave upon exposure to radiation, producing radical species which are capable of initiating the polymerisation of unsaturated compounds. Norrish Type II photoinitiators are compounds which do not fragment upon exposure to radiation and so will not typically initiate radical-chain polymerisation unless a co-initiator is present. Upon exposure to radiation, interaction between the Type II photoinitiator and the co-initiator leads to the generation of radical species which can initiate the polymerisation of UV-curable resins. Some radical photoinitiators may comprise two different photoactive moieties and exhibit both Norrish Type I and Norrish Type II activity. In this case, one moiety may be cleaved in two radical fragments and the other may be transformed into a radical by abstraction of an atom on exposure to radiation.

Combinations of photoinitiators can be provided, for instance as described in US 2008/0199797 (Sacripante et al.) which relates to a toner composition comprising one or more photoinitiators including, as one option, a combination of Irgacure® 184 (1-Hydroxy-cyclohexyl-phenyl-ketone) and Lucirin® TPO-L (ethyl (2,4,6-trimethylbenzoyl)phenyl phosphinate), both Norrish Type I photoinitiators.

Omnirad 819DW (bis(2,4,6-trimethylbenzoyl)-phenylphosphineoxide) is a photoinitiator commonly used in the curing of polyester/polystyrene systems. It can be used in combination with other Type I Norrish photoinitiators, as described in WO 2008/003601 (Ciba Speciality Chemicals Holding Inc.) which relates to aqueous polymer dispersions of controlled particle size having a moderate concentration of photoinitiator. The photoinitiator is dispersed in a solid polymeric carrier and is therefore not in a readily accessible liquid state.

However, known photoinitiator systems (which are generally dispersions) have been found to lack stability, in particular in aqueous polymer systems such as polyurethane dispersions or hydrogels; reducing or preventing their use in these applications.

It is therefore desirable to provide a photoinitiator which can be used in the curing of curable compositions, especially aqueous polymer dispersions or emulsions, optionally without the need for a photoinitiator stabilising component, whilst maintaining or improving curing performance relative to known systems. The invention is intended to overcome or ameliorate at least some aspects of this problem.

It has surprisingly been found that by emulsifying a liquid blend of at least two phosphine oxide photoinitiators, a stable photoinitiator formulation can be provided, which has comparable or better curing properties (in terms of rate of surface and depth curing) than the market leading products.

### Summary of the Invention

A first aspect of the invention is an emulsion comprising an organic phase dispersed in an aqueous phase, the organic phase comprising a liquid blend of phosphine oxide photoinitiators comprising a first phosphine oxide photoinitiator and a second phosphine oxide photoinitiator, wherein the organic phase comprises at least 40% by weight of phosphine oxide photoinitiators based on the weight of the organic phase.

Another aspect of the invention is a radiation-curable composition comprising the emulsion of the invention and an ethylenically unsaturated compound.

Yet another aspect of the invention is a radiation-curable composition comprising the emulsion of the invention and an unsaturated polymer dispersion or emulsion.

The invention also relates to a coating, ink, lacquer, varnish, sealant, adhesive, molding or 3D printing composition comprising the radiation curable composition of the invention.

Another aspect of the invention is a method for the preparation of a cured material comprising curing the composition of the invention, in particular by exposing the composition to radiation such as UV, near-UV, visible, infrared and/or near-infrared radiation or to an electron beam.

Another aspect of the invention is a cured material obtained by curing the composition of the invention.

Yet another aspect of the invention is a method of preparing a composition according to the invention, comprising dispersing an organic phase in an aqueous phase to form an emulsion, the organic phase comprising a liquid blend of phosphine oxide photoinitiators comprising a first phosphine oxide photoinitiator and a second phosphine oxide photoinitiator, the organic phase comprising at least 40% by weight of phosphine oxide photoinitiators based on the weight of the organic phase; and combining the emulsion with one or more ethylenically unsaturated compounds or with an unsaturated polymer dispersion or emulsion.

The invention also pertains to the use of a composition according to the invention, for the preparation of a coating, ink, lacquer, varnish, sealant, adhesive, molded article or 3D printed article.

### Detailed Description

### Definitions

In the present application, the term "comprise(s) a/an" means "comprise(s) one or more".
   Unless mentioned otherwise, the % by weight in a compound or a composition are expressed based on the weight of the compound, respectively of the composition.
The term « X is substantially free of Y » means that X comprises less than 10%, in particular less than 5%, more particularly less than 1%, even more particularly less than 0.1%, by weight of Y based on the weight of X.
The term « ethylenically unsaturated compound » means a compound comprising a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised acrylate (including cyanoacrylate), methacrylate, acrylamide, methacrylamide, styrene, maleate, fumarate, itaconate, allyl, propenyl, vinyl and combinations thereof, preferably selected from acrylate, methacrylate and vinyl, more preferably selected from acrylate and methacrylate. The carbon-carbon double bonds of a phenyl ring are not considered as polymerizable carbon-carbon double bonds.
The term "(meth)acrylate group" encompasses acrylate groups (-O-CO-CH=CH₂) and methacrylate groups (-O-CO-C(CH₃)=CH₂). In one embodiment, the (meth)acrylate is an acrylate. In another embodiment the (meth)acrylate is a methacrylate.
The term « alkyl » means a monovalent saturated alicyclic hydrocarbon radical of formula -CₙH₂ₙ₊₁. An alkyl may be linear or branched. A « C1-C20 alkyl » means an alkyl having 1 to 20 carbon atoms. Examples of alkyl groups include methyl, ethyl, propyl, isopropyl, butyl, isobutyl, tert-butyl, pentyl and hexyl.
The term « alkylaryl » means an alkyl substituted by an aryl group. A « C7-C20 alkylaryl » means an alkylaryl having 7 to 20 carbon atoms. An example of an alkylaryl group is benzyl (-CH₂-Phenyl).
The term « halogen » means an atom selected from CI, Br and I.
The term « alkylene » means a divalent saturated alicyclic hydrocarbon radical of formula -CₙH₂ₙ-. An alkylene may be linear or branched. A « C1-C20 alkylene » means an alkylene having 1 to 20 carbon atoms.
The term « alkenyl » means a monovalent unsaturated alicyclic hydrocarbon radical. An alkenyl may be linear or branched. A « C2-C20 alkenyl » means an alkenyl having 2 to 20 carbon atoms.
The term « cycloalkyl » means a monovalent saturated alicyclic hydrocarbon radical comprising a cycle. A « C3-C8 cycloalkyl » means a cycloalkyl having 3 to 8 carbon atoms. Examples of cycloalkyl groups include cyclopentyl, cyclohexyl and isobornyl.
The term « alkoxy » means a group of formula -O-Alkyl.
The term « aryl » means an aromatic hydrocarbon group. A « C6-C12 aryl » means an aryl having 6 to 12 carbon atoms.
The term « heteroaryl » means an aromatic group comprising a heteroatom such as O, N, S and mixtures thereof. A « C5-C9 heteroaryl » means a heteroaryl having 5 to 9 carbon atoms.
The term « polyol » means a compound comprising at least two hydroxyl groups.
The term « polyester » means a compound comprising at least two ester bonds.
The term « polyether » means a compound comprising at least two ether bonds.
The term « polycarbonate » means a compound comprising at least two carbonate bonds.
The term « polyester polyol » means a polyester comprising at least two hydroxyl groups.
The term « polyether polyol » means a polyether comprising at least two hydroxyl groups.
The term « polycarbonate polyol » means a polycarbonate comprising at least two hydroxyl groups.
The term « hydrocarbon radical » means a radical consisting of carbon and hydrogen atoms. Unless mentioned otherwise a hydrocarbon radical is not substituted or interrupted by any heteroatoms (O, N or S). A hydrocarbon radical may be linear or branched, saturated or unsaturated, aliphatic, cycloaliphatic or aromatic.
The term « hydroxyl group » means a -OH group.
The term « amine » means a -NRₐR_{b} group, wherein Rₐ and R_{b} are independently H or a C1-C6 alkyl. The term « primary amine » means a -NH₂ group. The term « secondary amine » means a -NHRₐ group wherein Rₐ is a C1-C6 alkyl. The term « tertiary amine » means a -NRₐR_{b} group, wherein Rₐ and R_{b} are independently a C1-C6 alkyl.
The term « carboxylic acid » means a-COOH group.
The term « isocyanate group » means a -N=C=O group.
The term « ester bond » means a -C(=O)-O- or -O-C(=O)- bond.
The term « ether bond » means a -O- bond.
The term « carbonate bond » means a -O-C(=O)-O- bond.
The term « urethane or carbamate » means a -NH-C(=O)-O- or -O-C(=O)-NH- bond.
The term « amide bond » means a -C(=O)-NH- or -NH-C(=O)- bond.
The term « urea bond » means a -NH-C(=O)-NH- bond.
The term « polyisocyanate » means a compound comprising at least two isocyanate groups.
The term « aliphatic » means a non-aromatic acyclic compound. It may be linear or branched, saturated or unsaturated. It may be substituted by one or more groups, for example selected from alkyl, hydroxyl, halogen (Br, Cl, I), isocyanate, carbonyl, amine, carboxylic acid, -C(=O)-OR', -C(=O)-O-C(=O)-R', each R' being independently a C1-C6 alkyl. It may comprise one or more bonds selected from ether, ester, amide, urethane, urea and mixtures thereof.
The term « alicyclic » means a compound that does not comprise any rings The term « cycloaliphatic » means a non-aromatic cyclic compound. It may be substituted by one or more groups as defined for the term « aliphatic ». It may comprise one or more bonds as defined for the term « aliphatic ».
The term « aromatic » means a compound comprising an aromatic ring, which means that respects Hückel's aromaticity rule, in particular a compound comprising a phenyl group. It may be substituted by one or more groups as defined for the term « aliphatic ». It may comprise one or more bonds as defined for the term « aliphatic ».
The term « saturated » means a compound that does not comprise any double or triple carbon-carbon bonds.
The term « unsaturated » means a compound that comprises a double or triple carbon-carbon bond, in particular a double carbon-carbon bond.
The term « optionally substituted » means a compound substituted by one or more groups selected from alkyl, cycloalkyl, aryl, heteroaryl, alkoxy, alkylaryl, haloalkyl, hydroxyl, halogen, isocyanate, nitrile, amine, amide, carboxylic acid, -C(=O)-R' -C(=O)-OR', -C(=O)NH-R', -NH-C(=O)R', -O-C(=O)-NH-R', -NH-C(=O)-O-R', -C(=O)-O-C(=O)-R' and -SO₂-NH-R', each R' being independently an optionally substituted group selected from alkyl, aryl and alkylaryl.
The term « 3D article » means a three-dimensional object obtained by 3D printing.

### Emulsion

The emulsion of the invention comprises an organic phase dispersed in an aqueous phase.

The aqueous phase is a liquid comprising water. Said liquid may further comprise organic solvents miscible with water, such as, for example, ethanol. However, the aqueous phase is preferably substantially free of organic solvents.

The organic phase is a liquid. Accordingly, the emulsion of the invention may correspond to liquid droplets of organic phase dispersed in an aqueous phase. In one embodiment, the droplets may exhibit a number average particle size (d50) of less than 1,500 nm, in particular 200 to 1,250 nm, in particular 500 to 1,000 nm. The number average particle size of the droplets may be determined by dynamic light scattering or laser diffraction.

It is to be understood that dispersions and colloidal suspensions are not encompassed by the emulsions of the present invention since they have a solid or semi-solid organic phase.

Emulsions advantageously provide for ease of handling, for instance there is no particulate matter in an emulsion system, and so the risk of dispensing equipment, such as ink jet nozzles, clogging during application is markedly reduced. Further, emulsions are easier to mix with the polymer system to be cured, in particular with aqueous formulations, as they are less disruptive to the system, which leads to greater stability of the system during storage.

The organic phase comprises a liquid blend of phosphine oxide photoinitiators. Said organic phase may further comprise other components, such as surfactants and buffering agents.

The organic phase may be mainly constituted of phosphine oxide photoinitiators and optionally surfactants and additives. Accordingly, the photoinitiators may not be dissolved in an organic carrier, such as a non-reactive solvent and/or an ethylenically unsaturated compound. In one embodiment, the organic phase is substantially free of non-reactive solvents and/or ethylenically unsaturated compounds.

The organic phase comprises at least 40%, in particular 50 to 100%, more particularly 55 to 90%, even more particularly 60 to 80%, by weight of phosphine oxide photoinitiators based on the weight of the organic phase.

In one embodiment, the organic phase consists essentially of phosphine oxide photoinitiators and optionally surfactants and additives. The organic phase may comprise less than 60%, in particular 0 to 50%, more particularly 10 to 45%, even more particularly 20 to 40%, by weight of surfactant and additives based on the weight of the organic phase.

The emulsion of the invention may be mainly constituted of phosphine oxide photoinitiators, water and optionally surfactants and additives. In one embodiment, the emulsion comprises at least 20%, in particular 22 to 60%, more particularly at least 25% to 55%, even more particularly 30 to 50%, by weight of phosphine oxide photoinitiators based on the weight of the emulsion.

The blend of phosphine oxide photoinitiators included in the organic phase is liquid. As used herein, the term "liquid" means a substance that flows under its own weight at room temperature (20-25°C). Liquid blends may be obtained by mixing two liquid phosphine oxide photoinitiators or by dissolving a solid phosphine oxide photoinitiator in a liquid phosphine oxide photoinitiator or in a photoinitiator blend which is of liquid form. Alternatively, the blend may be a eutectic mixture. The term "eutectic mixture" means a mixture of two or more solid compounds that forms a liquid when blended in a specific ratio.

The blend of phosphine oxide photoinitiators comprises a first phosphine oxide photoinitiator and a second phosphine oxide photoinitiator. The first and second phosphine oxide photoinitiators are distinct from one another. The blend may comprise a mixture of first phosphine oxide photoinitiators and/or a mixture of second phosphine oxide photoinitiators.

As used herein, the term "phosphine oxide" refers to a compound comprising a group of the following formula:

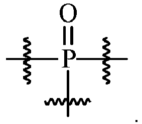

As used herein, the term "photoinitiator" refers to a compound that generates reactive species (free radicals, cations or anions) when exposed to radiation.

Phosphine oxide photoinitiators are radical photoinitiators, i.e. compounds that generate radicals when exposed to radiation. Radical photoinitiators can adopt two different modes of action, and are classified by mode of action as Norrish Type I and Norrish Type II photoinitiators.

As used herein, the term "activity" with reference to Norrish Type I and Norrish Type II activity is intended to relate to Norrish photoinitiation and analogous reactions. For instance, a photoinitiator having Norrish Type I activity within the scope of this invention would be a photoinitiator characterized by a cleavage reaction into two radical fragments of the original photoinitiator on exposure to UV light. For an initiator having Norrish Type II activity, exposure to UV light causes the abstraction of an atom, such as hydrogen, to generate the radical.

The blend of phosphine oxide photoinitiators may comprise more than one phosphine oxide photoinitiator with Type I activity, and/or more than one phosphine oxide derivative with Type II activity. The presence of more than two phosphine oxides may stabilise the emulsion, however, it will often be the case that a third or further phosphine oxide photoinitiator is not required as one photoinitiator is easily emulsified or dissolved in the other. Further, the blend may include a photoinitiator which exhibits Norrish Type II activity only, or which exhibits hybrid activity, including active centres for both Type II and Type I Norrish photoinitiation. As such, the phosphine oxide derivative with Norrish Type II activity may also exhibit Norrish Type I activity. In addition, whilst not generally necessary, the presence of further photoinitiators is not precluded, as such, one or more non-phosphine oxide photoinitiators may be present, for instance to stabilise the photoinitiator or provide a wider activity range. However, it will often be the case that the photoinitiator blend includes only one phosphine oxide derivative with Norrish Type I activity and only one phosphine oxide derivative with Norrish Type II activity. This reduces the likelihood of side reactions, and provides for a simple formulation which is stable during storage both before and after combination with curable compositions, in particular aqueous unsaturated polymer dispersions or emulsions.

In one embodiment, the first phosphine oxide photoinitiator may have Norrish type I activity and/or Norrish type II activity. In particular, the first phosphine oxide photoinitiator may have Norrish type I activity.

In one embodiment, the second phosphine oxide photoinitiator may have Norrish type I activity and/or Norrish type II activity. In one embodiment, the second phosphine oxide photoinitiator may have Norrish type II activity or both Norrish type I and Norrish type II activity. In another embodiment, the second phosphine oxide photoinitiator may have Norrish type I activity.

In particular, the first phosphine oxide photoinitiator may have Norrish type I activity and the second phosphine oxide photoinitiator may have Norrish type II activity or both Norrish type I and Norrish type II activity.

Alternatively, the first phosphine oxide photoinitiator may have Norrish type I activity and the second phosphine oxide photoinitiator may have Norrish type I activity.

It may be the case that one or more of the phosphine oxide photoinitiators is an acyl phosphine oxide, for instance a mono-acyl phosphine oxide or a di-acyl (or a bis-acyl) phosphine oxide. Often, at least one of the phosphine oxide photoinitiators is a mono-acyl phosphine oxide. The use of mono-acyl phosphine oxide can be advantageous due to their greater solubility when compared to the generally larger di-acyl analogues.

As used herein, the term "mono-acyl phosphine oxide" means a compound comprising a group of the following formula: 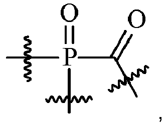 there being no other -C(=O)- group directly bound to the phosphorous atom.

The term "di-acyl phosphine oxide" means a compound comprising a group of the following formula: 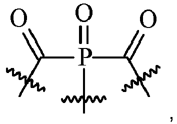 there being no other -C(=O)- group directly bound to the phosphorous atom.

The first phosphine oxide photoinitiator may be selected from a mono-acyl phosphine oxide, a di-acyl phosphine oxide and mixtures thereof, in particular a mono-acyl phosphine oxide.

In one embodiment, the first phosphine oxide photoinitiator may be selected from a liquid mono-acyl phosphine oxide, a liquid di-acyl phosphine oxide and mixtures thereof, in particular a liquid mono-acyl phosphine oxide.

The second phosphine oxide photoinitiator may be selected from a mono-acyl phosphine oxide, a di-acyl phosphine oxide and mixtures thereof, in particular a mono-acyl phosphine oxide.

In one embodiment, the second phosphine oxide photoinitiator may be selected from a liquid or solid mono-acyl phosphine oxide, a liquid or solid di-acyl phosphine oxide and mixtures thereof, in particular a liquid or solid mono-acyl phosphine oxide.

In a particular embodiment, the first phosphine oxide photoinitiator and the second phosphine oxide photoinitiator are both mono-acyl phosphine oxides.

Additionally or alternatively, one or more of the phosphine oxide photoinitiators may be a phosphinate.

As used herein, the term "phosphinate" means a compound having a group of the following formula: 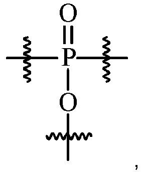 there being no other -O- group directly bound to the phosphorous atom.

The use of phosphinates is particularly advantageous as phosphinates have low melting points and may be liquid at room temperature. Blends containing a phosphinate may thus be easier to handle and to transform into a stable emulsion.

In particular, the phosphinate may be an alkyl phosphinate.

As used herein, the term "alkyl phosphinate" means a compound having a group of the following formula: 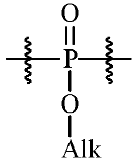 wherein Alk is an alkyl, in particular a C1-C6 alkyl, more particularly ethyl..

The first phosphine oxide photoinitiator may be a phosphinate.

The second phosphine oxide photoinitiator may be a phosphinate.

In a particular embodiment, the first phosphine oxide photoinitiator and the second phosphine oxide photoinitiator may both be phosphinates.

Advantageously, the mono-acyl phosphine group and the phosphinate group may be combined in the same moiety to give a mono-acyl phosphinate. As used herein, the term "mono-acyl phosphinate" means a compound having a group of the following formula:

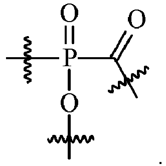

The first phosphine oxide photoinitiator may be a mono-acyl phosphinate.

The second phosphine oxide photoinitiator may be a mono-acyl phosphinate.

Alternatively, the di-acyl phosphine group and the phosphinate group may be combined in the same moiety to give a di-acyl phosphinate. As used herein, the term "di-acyl phosphinate" means a compound having a group of the following formula:

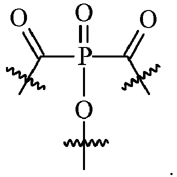

The first phosphine oxide photoinitiator may be a di-acyl phosphinate.

The second phosphine oxide photoinitiator may be a di-acyl phosphinate.

In a particular embodiment, the first phosphine oxide photoinitiator and the second phosphine oxide photoinitiator may both be di-acyl phosphinates.

In one embodiment, the first phosphine oxide photoinitiator may be represented by formula la: 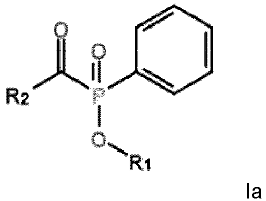 wherein R₁ is selected from a C₁-C₅ alkyl, and wherein R₂ comprises an aromatic group.

In particular, R₁ may be selected from methyl, ethyl and n-propyl.

Preferably, R₁ is methyl or ethyl, even more preferably R₁ is ethyl. Such a selection will advantageously lead to ease of synthesis and ready availability.

In particular, R₂ comprises a 2,4,6-trimethylphenyl functional group as shown below:

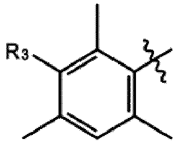

In this structure, the 1-position marked by a wavy line may be directly linked through a single bond to the acyl (C(=O)) group of formula Ia. R₃ is generally selected from hydrogen, a C₁-C₅ alkyl, and -CO-R₄ wherein R₄ comprises a C₁-C₅ alkyl, phenyl or benzyl. In one embodiment R₃ is hydrogen, such that R₂ is 2,4,6-trimethylphenyl. Alternatively, R₃ may be -C(=O)-Ph. This combination of functionalities provides for a photoinitiator compound with good reactivity at a precisely tuned wavelength.

In a particularly preferred embodiment, the first phosphine oxide photoinitiator is ethyl (2,4,6-trimethylbenzoyl) phenyl phosphinate, also known as SpeedCure TPO-L, represented by the following formula II:

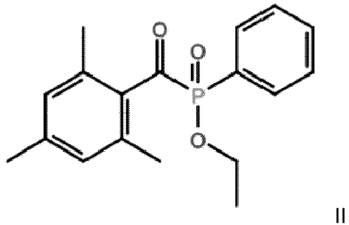

Speedcure TPO-L is advantageously liquid at room temperature (20-25°C) and can be used to dissolve the second phosphine oxide photoinitiator. Speedcure TPO-L has Norrish Type I activity and provides enhanced surface and depth curing speeds.

Alternatively, the first phosphine oxide photoinitiator may be a polymeric TPO-L. An example of a polymeric T-POL is sold under reference Omnipol TP by IGM Resins.

In another embodiment, the first phosphine oxide photoinitiator may be a liquid BAPO represented by formula Ib: 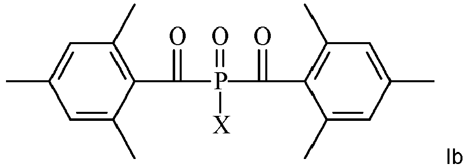
wherein X is selected from -O-(C₁-C₁₈ alkyl), -O(-CH₂-CH₂-O)ₙ-H, -O(-CH₂-CH₂-O)ₙ-(C₁-C₆ alkyl), -(CH₂)ₘ-C(=O)-O-(C₁-C₁₈ alkyl), -(CH₂)ₘ-C(=O)-(O-CH₂-CH₂)ₙ-OH, and -(CH₂)ₘ-C(=O)-(O-CH₂-CH₂)ₙ-(C₁-C₆ alkyl);
m is independently 1 to 10; and
n is independently 1 to 20.

In another embodiment, the first phosphine oxide photoinitiator may be bis(2,6-dimethoxybenzoyl)(2,4,4-trimethylpentyl)phosphine oxide.

The second phosphine oxide photoinitiator may comprise two photoactive units. The first photoactive unit may have a Norrish Type I activity and be cleaved into two radical fragments on exposure to radiation. The second photoactive unit may have a Norrish Type II activity and be transformed into a radical by abstraction of an atom (i.e. a hydrogen atom) on exposure to radiation.

For example, the second phosphine oxide photoinitiator may have a first phosphine oxide photoactive unit of formula -P(=O)-C(=O)-, preferably a first acyl phosphine oxide photoactive unit of formula -P(=O)-C(=O)-Ar₁-, and a second aromatic ketone photoactive unit of formula -C(=O)-Ar₂ which is distinct from the first photoactive unit, wherein Ar₁ and Ar₂ are independently an optionally substituted aryl, preferably an optionally substituted phenyl. In a preferred embodiment, the second aromatic ketone photoactive unit may be covalently bound (i.e. with a direct bond) to the aryl group of the first acyl phosphine oxide photoactive unit, in particular forming a moiety of formula -P(=O)-C(=O)-Ar₁-C(=O)-Ar₂-. This advantageously leads to the presence of two photoactive units having different photo-absorption wavelengths in the same molecule. In the aromatic ketone photoactive unit, the photoactivity is through a so-called Type 2 mechanism, that of proton abstraction from a suitable synergist such as a tertiary amine. This gives rise to a process of radical formation which is much less sensitive to oxygen inhibition than the radical forming process in the phosphine oxide photoactive unit which is a Type 1 mechanism involving free radicals generated by the scission of the (OP)-(C=O) bond.

In one embodiment, the second phosphine oxide photoinitiator has the following formula III: 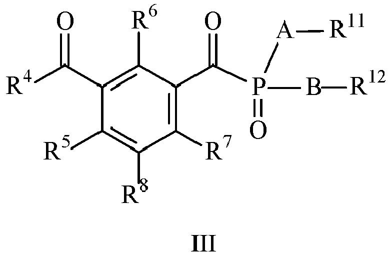 wherein
R⁴ is C₁₋₂₀ alkyl, C₇-C₂₀ alkylaryl or an optionally substituted phenyl or polyphenyl;
R⁵, R⁶, Rand R⁸ are independently hydrogen, halogen, C₁₋₂₀ alkyl, -OR⁹ or CF₃ and two of radicals R⁵, R⁶, R⁷ and R⁸ may together form C₁₋₂₀ alkylene which can be interrupted by O, S or NR¹⁰;
R⁹ is hydrogen, C₁₋₂₀ alkyl, C₂₋₂₀ alkenyl, C₃-C₈ cycloalkyl, phenyl, benzyl or C₂₋₂₀ alkyl which is interrupted once or more than once by O or S and which is unsubstituted or is substituted by OH and/or SH;
R¹⁰ is hydrogen, phenyl, C₁₋₁₂ alkyl or C₂₋₁₂ alkyl which is interrupted once or more than once by O or S and which is unsubstituted or substituted by OH and/or SH;
R¹¹ and R¹² are independently an optionally substituted group selected from C₁-C₂₀ alkyl, C₁-C₂₀ alkoxy, C₂₋₂₀ alkenyl, C₃-C₈ cycloalkyl, C₆-C₁₂ aryl, C₇-C₂₀ alkylaryl and C₅-C₉ heteroaryl;
A and B are independently a bond, -(CH₂)ₙ- or -C(=O)-;
n is 1 to 10.

In particular, R⁴ may be C₁₋₁₂ alkyl, benzyl or an optionally substituted phenyl. More particularly, R⁴ may be phenyl.

In particular, R⁵, R⁶ and R⁷ may independently be hydrogen, halogen, C₁₋₁₂ alkyl or C₁-C₁₂ alkoxy. More particularly, R⁵, R⁶ and R⁷ may independently be hydrogen, CI, methyl or methoxy. Even more particularly, R⁵, R⁶ and R⁷ may be methyl.

In particular, R⁸ may be hydrogen.

In particular, R¹¹ and R¹² may independently be C₁-C₁₂ alkyl, C₁-C₁₂ alkoxy or an optionally substituted phenyl.

In particular A and B may independently be a bond or -C(=O)-.

More particularly, -A-R¹¹ and -B-R¹² may independently be phenyl, methoxy, ethoxy, trimethylpentyl or a group of formula IV: 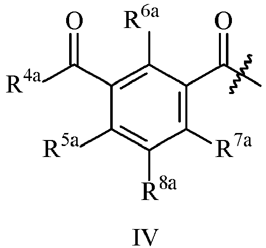 wherein
R^{4a}, R^{5a}, R^{6a}, R^{7a} and R^{8a} are respectively as defined above for R⁴, R⁵, R⁶, R⁷ and R⁸.

Even more particularly, -A-R¹¹ is phenyl and -B-R¹² is phenyl, methoxy, ethoxy, trimethylpentyl or a group of formula IV as defined above.

In a preferred embodiment, the second phosphine oxide photoinitiator is according to formula III, wherein
R⁴ is C₁₋₁₂ alkyl, benzyl or an optionally substituted phenyl;
R⁵, R⁶ and R⁷ are independently hydrogen, halogen, C₁₋₁₂ alkyl or C₁-C₁₂ alkoxy;
R⁸ is hydrogen;
R¹¹ and R¹² are independently C₁-C₁₂ alkyl, C₁-C₁₂ alkoxy or an optionally substituted phenyl;
A and B are independently a bond or -C(=O)-.

In a particularly preferred embodiment, the second phosphine oxide photoinitiator is according to formula III, wherein
R⁴ is phenyl;
R⁵, R⁶ and R⁷ are independently hydrogen, CI, methyl or methoxy;
R⁸ is hydrogen;
-A-R¹¹ and -B-R¹² are independently phenyl, methoxy, ethoxy, trimethylpentyl or a group of formula IV as defined above.

The second phosphine oxide photoinitiator may, in particular, be selected from the following compounds: 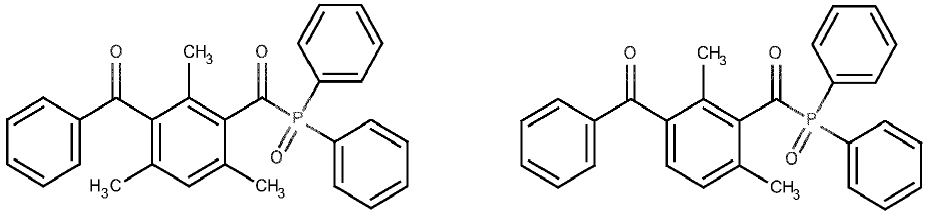 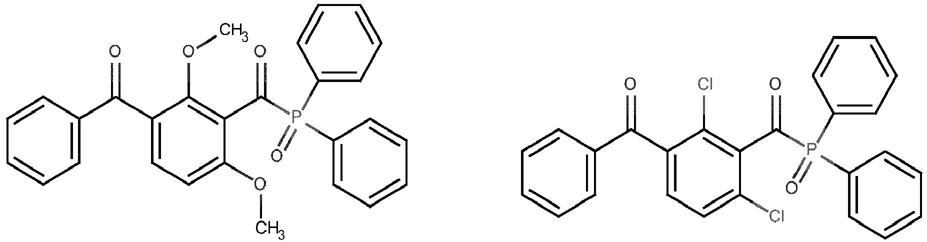 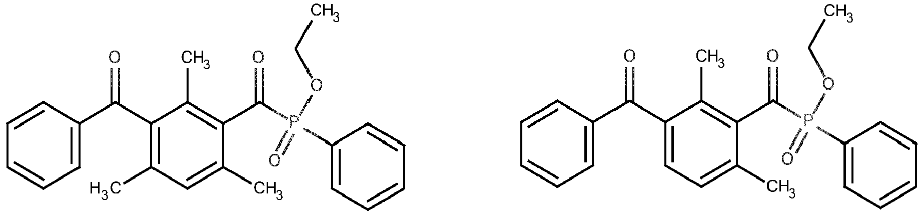 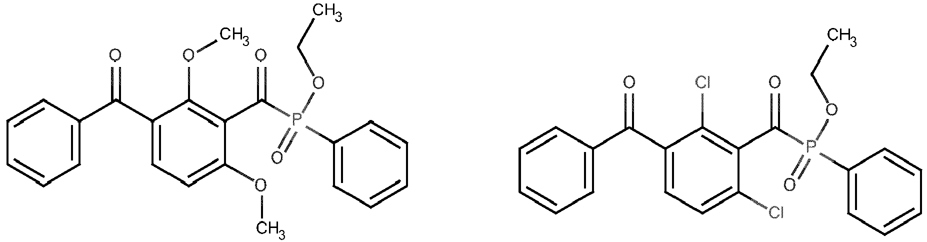 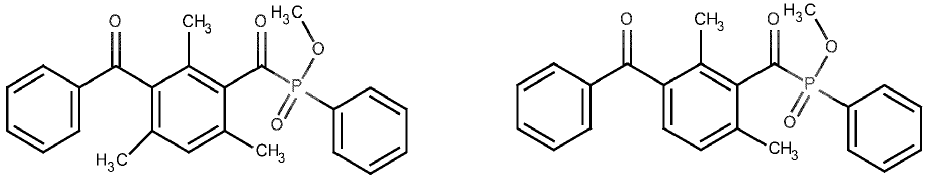 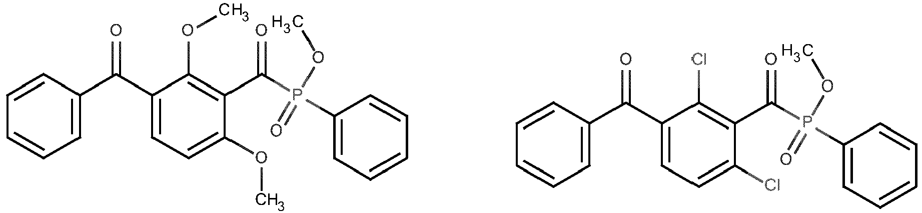 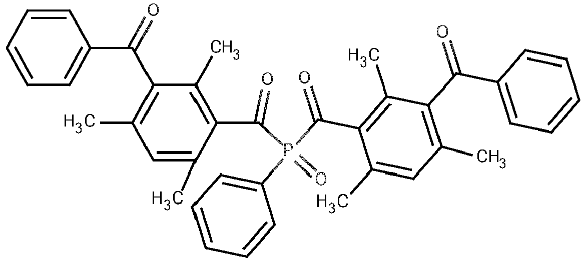 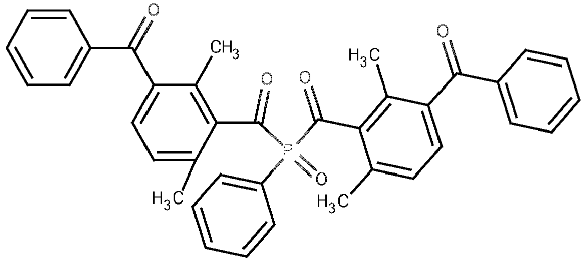 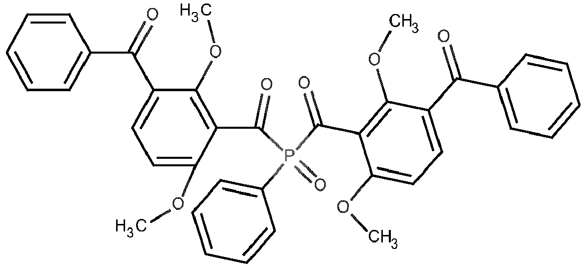 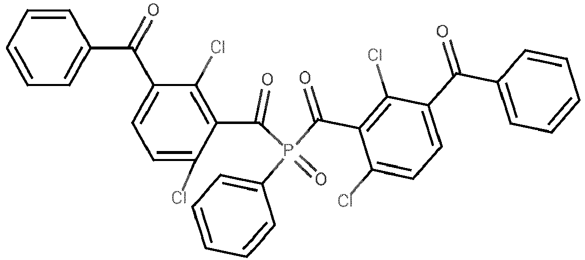 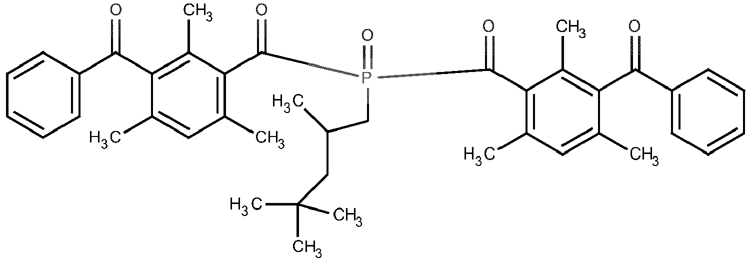 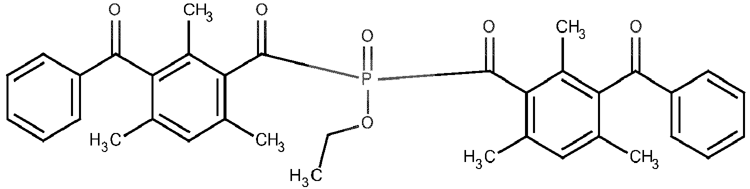 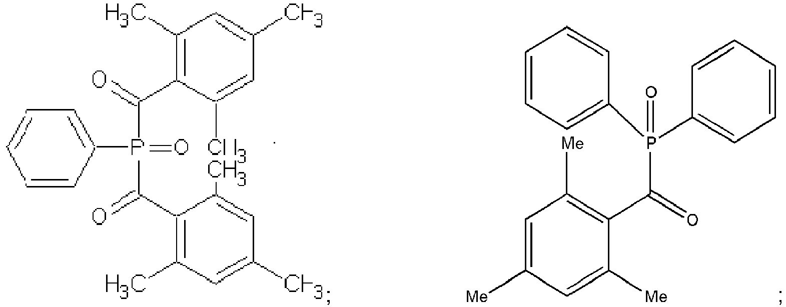 and mixtures thereof.

Particularly preferred second phosphine oxide photoinitiators are compounds are selected from 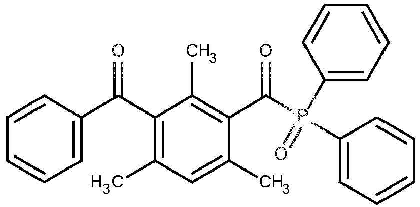 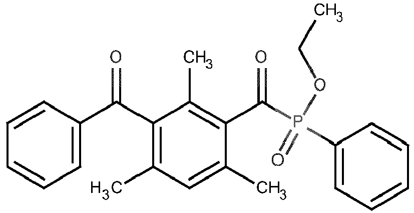 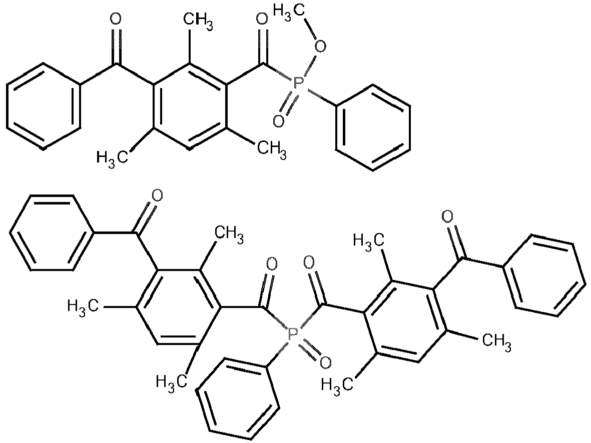 and mixtures thereof.

In a particularly preferred embodiment, the second phosphine oxide photoinitiator is ethyl (3-benzoyl-2,4,6-trimethylbenzoyl)(phenyl) phosphinate, also known as SpeedCure XKm, represented by the following formula V:

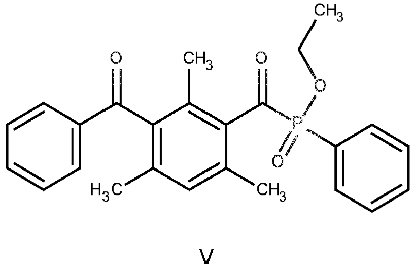

SpeedCure XKm has both Norrish Type I and Norrish Type II activity and provides for enhanced surface and depth curing speeds.

In a particularly preferred embodiment, the first phosphine oxide photoinitiator is a compound of formula II and the second phosphine oxide photoinitiator is a compound of formula V, providing excellent curing speed.

The weight ratio of the first phosphine oxide photoinitiator to the second phosphine oxide photoinitiator may be in the range 10:1 - 1:10. However, it can be beneficial to include more of the first phosphine oxide photoinitiator than the second phosphine oxide photoinitiator because this tunes the activation wavelength such that photoinitiation may be triggered using LED light sources. As such, the weight ratio of the first phosphine oxide photoinitiator to the second phosphine oxide photoinitiator may be in the range 10:1 - 1:1, in particular 7:1 - 3:1, more particularly about 5:1 (e.g. 11:2 - 9:2). At these ratios, in particular when the ratio is in the range 7:1 to 3:1, good cure speeds are observed with a variety of substrates.

The emulsion of the present invention may further comprise a surfactant and/or an additive, in particular an additive selected from a rheology modifier, a pH modifier and mixtures thereof.

The emulsion of the present invention may comprise a mixture of surfactants. Whilst the presence of stabilising components for the emulsion is not essential to the invention, it may be that surfactants are included to "stabilize" the emulsion formed from first phosphine oxide photoinitiator and the second phosphine oxide photoinitiator. The surfactants will generally be well known in the art and are selected to provide stable oil-in-water emulsions which are readily dispersible in aqueous systems. The surfactant may be selected from a cationic surfactant, an anionic surfactant, an amphoteric surfactant, a non-ionic surfactant and mixtures thereof, in particular a non-ionic surfactant. In particular, the surfactant may be selected from polysorbates (Tween), alkyl polyglycol ethers, alkyl phenol polyglycol ethers, sulfosuccinate salts, polyglycerol esters, ethoxylated alcohols (Brij), sorbitan esters (Span), C6-C20 alkyl sulfates or sulfonates, an optionally substituted diphenyl oxide disulfonate, C6-C20 alkyl ether sulfates or sulfonates, an optionally ethoxylated sulfosuccinate monoester or diester, C6-C20 alkyl phosphates or phosphonates, C6-C20 alkyl ether phosphates or phosphonates, ethoxylated fatty alcohols (C10-C40 with an ethoxy unit number ranging from 2 to 100), ethoxy-propoxy copolymers (EO-PO copolymer) and mixtures thereof and combinations thereof. More particularly, the surfactant may be selected from sorbitans, polysorbates, and mixtures thereof, such as sorbitan monolaurate, polysorbate 60 and mixtures thereof. Often both sorbitan monolaurate and polysorbate 60 will be present.

Rheology modifiers may be present, such as homo and copolymers of acrylic and methacrylic acid, xanthan gums, carboxy methyl cellulose and hydroxyethyl cellulose. Rheology modifiers may be used to prevent emulsion instability from sedimentation or creaming.

pH modifiers may be present, for instance alkalis including sodium hydroxide, soda ash, sodium silicate, sodium phosphates, lime, sulfuric acid, and hydrochloric acid.

### Composition

### With an ethylenically unsaturated compound

In a second aspect of the invention, there is provided a radiation-curable composition comprising the emulsion of the invention and an ethylenically unsaturated compound.

The radiation-curable composition may comprise 1 to 20%, in particular 2 to 15%, more particularly 5 to 10%, by weight of emulsion according to the invention based on the weight of the radiation-curable composition.

In one embodiment, the radiation-curable composition of the invention comprise a (meth)acrylate-functionalized compound. The radiation-curable composition may comprise a mixture of (meth)acrylate-functionalized compounds. A (meth)acrylate-functionalized compound may be described as an organic compound bearing one or more (meth)acrylate functional groups per molecule. (Meth)acrylate-functionalized compounds are capable of participating in a free radical reaction or anionic reaction, in particular a reaction initiated by ultraviolet radiation or electron beam radiation. Such reactions may result in a polymerization or curing whereby the (meth)acrylate-functionalized compound becomes part of a polymerized matrix or polymeric chain. In various embodiments of the invention, the (meth)acrylate-functionalized compound may contain one, two, three, four, five or more (meth)acrylate functional groups per molecule. Combinations of multiple (meth)acrylate-functionalized compounds containing different numbers of (meth)acrylate groups may be utilized in the curable compositions of the present invention.

The curable compositions of the present invention may thus contain one or more (meth)acrylate functional compounds capable of undergoing free radical and/or anionic polymerization (curing) initiated by exposure to ultraviolet or electron beam radiation. The (meth)acrylate-functionalized compounds may be oligomers or monomers or a combination of oligomer(s) and monomer(s).

In one embodiment, the ethylenically unsaturated compound may be selected from one or more (meth)acrylate-functionalized monomers, one or more (meth)acrylate-functionalized oligomers and mixtures thereof.

As used herein, the term "(meth)acrylate-functionalized monomer" means a monomer comprising a (meth)acrylate group, in particular an acrylate group. The term "(meth)acrylate-functionalized oligomer" means an oligomer comprising a (meth)acrylate group, in particular an acrylate group.

Any of the following types of (meth)acrylate-functionalized compounds may, for example, be employed in the curable compositions of the present invention: monomers such as (meth)acrylate esters of aliphatic mono-alcohols, (meth)acrylate esters of alkoxylated aliphatic mono-alcohols, (meth)acrylate esters of aliphatic polyols, (meth)acrylate esters of alkoxylated aliphatic polyols, (meth)acrylate esters of aromatic ring-containing alcohols, and (meth)acrylate esters of alkoxylated aromatic ring-containing alcohols; and oligomers such as epoxy (meth)acrylates, polyether (meth)acrylates, urethane (meth)acrylates, polyester (meth)acrylates, the amine- and sulfide-modified derivatives thereof; and combinations thereof.

In one embodiment, the ethylenically unsaturated compound comprises a (meth)acrylate-functionalized monomer. The ethylenically unsaturated compound may comprise a mixture of (meth)acrylate-functionalized monomers.

The (meth)acrylate-functionalized monomer may have a molecular weight of less than 600 g/mol, in particular from 100 to 550 g/mol, more particularly 200 to 500 g/mol.

The (meth)acrylate-functionalized monomer may have 1 to 6 (meth)acrylate groups, in particular 1 to 3 (meth)acrylate groups, more particularly 1 to 3 acrylate groups.

The (meth)acrylate-functionalized monomer may comprise a mixture of (meth)acrylate-functionalized monomers having different functionalities. For example the (meth)acrylate-functionalized monomer may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acrylate and/or methacrylate groups per molecule.

In one embodiment, the (meth)acrylate functionalized monomer comprises a mono(meth)acrylate-functionalized monomer. The mono(meth)acrylate-functionalized monomer may advantageously function as a reactive diluent and reduce the viscosity of the composition of the invention.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized monomers suitable for use in the curable compositions of the present invention: methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate: 2-phenoxyethyl (meth)acrylate; lauryl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

In one embodiment, the (meth)acrylate functionalized monomer may comprise a (meth)acrylate-functionalized monomer containing two or more (meth)acrylate groups per molecule.

Examples of suitable (meth)acrylate-functionalized monomers containing two or more (meth)acrylate groups per molecule include acrylate and methacrylate esters of polyhydric alcohols (organic compounds containing two or more, e.g., 2 to 6, hydroxyl groups per molecule). Specific examples of suitable polyhydric alcohols include C₂₋₂₀ alkylene glycols (glycols having a C₂₋₁₀ alkylene group may be preferred, in which the carbon chain may be branched; e.g., ethylene glycol, trimethylene glycol, 1,2-propylene glycol, 1,2-butanediol, 1,3-butanediol, 2,3-butanediol, tetramethylene glycol (1,4-butanediol), 1,5-pentanediol, 1,6-hexanediol, 1,8-octanediol, 1,9-nonanediol, 1,12-dodecanediol, cyclohexane-1,4-dimethanol, bisphenols, and hydrogenated bisphenols, as well as alkoxylated (e.g., ethoxylated and/or propoxylated) derivatives thereof), diethylene glycol, glycerin, alkoxylated glycerin, triethylene glycol, dipropylene glycol, tripropylene glycol, trimethylolpropane, alkoxylated trimethylolpropane, ditrimethylolpropane, alkoxylated ditrimethylolpropane, pentaerythritol, alkoxylated pentaerythritol, dipentaerythritol, alkoxylated dipentaerythritol, cyclohexanediol, alkoxylated cyclohexanediol, cyclohexanedimethanol, alkoxylated cyclohexanedimethanol, norbornene dimethanol, alkoxylated norbornene dimethanol, norbornane dimethanol, alkoxylated norbornane dimethanol, polyols containing an aromatic ring, cyclohexane-1,4-dimethanol ethylene oxide adducts, bis-phenol ethylene oxide adducts, hydrogenated bisphenol ethylene oxide adducts, bisphenol propylene oxide adducts, hydrogenated bisphenol propylene oxide adducts, cyclohexane-1,4-dimethanol propylene oxide adducts, sugar alcohols and alkoxylated sugar alcohols. Such polyhydric alcohols may be fully or partially esterified (with (meth)acrylic acid, (meth)acrylic anhydride, (meth)acryloyl chloride or the like), provided they contain at least two (meth)acrylate functional groups per molecule. As used herein, the term "alkoxylated" refers to compounds containing one or more oxyalkylene moieties (e.g., oxyethylene and/or oxypropylene moieties). An oxyalkylene moiety corresponds to the general structure -R-O-, wherein R is a divalent aliphatic moiety such as -CH₂CH₂- or-CH₂CH(CH₃)-. For example, an alkoxylated compound may contain from 1 to 30 oxyalkylene moieties per molecule.

Exemplary (meth)acrylate-functionalized monomers containing two or more (meth)acrylate groups per molecule may include ethoxylated bisphenol A di(meth)acrylates; triethylene glycol di(meth)acrylate; ethylene glycol di(meth)acrylate; tetraethylene glycol di(meth)acrylate; polyethylene glycol di(meth)acrylates; 1,4-butanediol diacrylate; 1,4-butanediol dimethacrylate; diethylene glycol diacrylate; diethylene glycol dimethacrylate, 1,6-hexanediol diacrylate; 1,6-hexanediol dimethacrylate; neopentyl glycol diacrylate; neopentyl glycol di(meth)acrylate; polyethylene glycol (600) dimethacrylate (where 600 refers to the approximate number average molecular weight of the polyethylene glycol portion); polyethylene glycol (200) diacrylate; 1,12-dodecanediol dimethacrylate; tetraethylene glycol diacrylate; triethylene glycol diacrylate, 1,3-butylene glycol dimethacrylate, tripropylene glycol diacrylate, polybutadiene diacrylate; methyl pentanediol diacrylate; polyethylene glycol (400) diacrylate; ethoxylated₂ bisphenol A dimethacrylate; ethoxylated₃ bisphenol A dimethacrylate; ethoxylated₃ bisphenol A diacrylate; cyclohexane dimethanol dimethacrylate; cyclohexane dimethanol diacrylate; ethoxylated₁₀ bisphenol A dimethacrylate (where the numeral following "ethoxylated" is the average number of oxyalkylene moieties per molecule); dipropylene glycol diacrylate; ethoxylated₄ bisphenol A dimethacrylate; ethoxylated₆ bisphenol A dimethacrylate; ethoxylated₈ bisphenol A dimethacrylate; alkoxylated hexanediol diacrylates; alkoxylated cyclohexane dimethanol diacrylate; dodecane diacrylate; ethoxylated₄ bisphenol A diacrylate; ethoxylated₁₀ bisphenol A diacrylate; polyethylene glycol (400) dimethacrylate; polypropylene glycol (400) dimethacrylate; metallic diacrylates; modified metallic diacrylates; metallic dimethacrylates; polyethylene glycol (1000) dimethacrylate; methacrylated polybutadiene; propoxylated₂ neopentyl glycol diacrylate; ethoxylated₃₀ bisphenol A dimethacrylate; ethoxylated₃₀ bisphenol A diacrylate; alkoxylated neopentyl glycol diacrylates; polyethylene glycol dimethacrylates; 1,3-butylene glycol diacrylate; ethoxylated₂ bisphenol A dimethacrylate; dipropylene glycol diacrylate; ethoxylated₄ bisphenol A diacrylate; polyethylene glycol (600) diacrylate; polyethylene glycol (1000) dimethacrylate; tricyclodecane dimethanol diacrylate; propoxylated neopentyl glycol diacrylates such as propoxylated₂ neopentyl glycol diacrylate; diacrylates of alkoxylated aliphatic alcohols; trimethylolpropane trimethacrylate; trimethylolpropane triacrylate; tris (2-hydroxyethyl) isocyanurate triacrylate; ethoxylated₂₀ trimethylolpropane triacrylate; pentaerythritol triacrylate; ethoxylated₃ trimethylolpropane triacrylate; propoxylated₃ trimethylolpropane triacrylate; ethoxylated₆ trimethylolpropane triacrylate; propoxylated₆ trimethylolpropane triacrylate; ethoxylated₉ trimethylolpropane triacrylate; alkoxylated trifunctional acrylate esters; trifunctional methacrylate esters; trifunctional acrylate esters; propoxylated₃ glyceryl triacrylate; propoxylated_{5.5} glyceryl triacrylate; ethoxylated₁₅ trimethylolpropane triacrylate; trifunctional phosphoric acid esters; trifunctional acrylic acid esters; pentaerythritol tetraacrylate; di-trimethylolpropane tetraacrylate; ethoxylated₄ pentaerythritol tetraacrylate; pentaerythritol polyoxyethylene tetraacrylate; dipentaerythritol pentaacrylate; and pentaacrylate esters.

The curable composition of the invention may comprise 10 to 80%, in particular 15 to 75%, more particularly 20 to 70%, by weight of (meth)acrylate-functionalized monomer based on the total weight of the curable composition.

In one embodiment, the ethylenically unsaturated compound comprises a (meth)acrylate-functionalized oligomer. The ethylenically unsaturated compound may comprise a mixture of (meth)acrylate-functionalized oligomers.

The (meth)acrylate-functionalized oligomer may be selected in order to enhance the flexibility, strength and/or modulus, among other attributes, of a cured polymer prepared using the curable composition of the present invention.

The (meth)acrylate functionalized oligomer may have 1 to 18 (meth)acrylate groups, in particular 2 to 6 (meth)acrylate groups, more particularly 2 to 6 acrylate groups.

The (meth)acrylate functionalized oligomer may have a number average molecular weight equal or more than 600 g/mol, in particular 800 to 15,000 g/mol, more particularly 1,000 to 5,000 g/mol.

In particular, the (meth)acrylate-functionalized oligomers may be selected from the group consisting of (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), and (meth)acrylate-functionalized polyester oligomers (sometimes also referred to as "polyester (meth)acrylate oligomers") and mixtures thereof.

Preferably, the (meth)acrylate-functionalized oligomer comprises a (meth)acrylate-functionalized urethane oligomer, more preferably an acrylate-functionalized urethane oligomer.

Advantageously, the (meth)acrylate-functionalized oligomer comprises a (meth)acrylate-functionalized urethane oligomer having two (meth)acrylate groups, more preferably an acrylate-functionalized urethane oligomer having two acrylate groups.

Exemplary polyester (meth)acrylate oligomers include the reaction products of acrylic or methacrylic acid or mixtures or synthetic equivalents thereof with hydroxyl group-terminated polyester polyols. The reaction process may be conducted such that all or essentially all of the hydroxyl groups of the polyester polyol have been (meth)acrylated, particularly in cases where the polyester polyol is difunctional. The polyester polyols can be made by polycondensation reactions of polyhydroxyl functional components (in particular, diols) and polycarboxylic acid functional compounds (in particular, dicarboxylic acids and anhydrides). The polyhydroxyl functional and polycarboxylic acid functional components can each have linear, branched, cycloaliphatic or aromatic structures and can be used individually or as mixtures.

Examples of suitable epoxy (meth)acrylates include the reaction products of acrylic or methacrylic acid or mixtures thereof with an epoxy resin (polyglycidyl ether or ester). The epoxy resin may, in particular, by selected from bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy I-3',4'-epoxy-6'-methytcydohexanecarboxytate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

Suitable polyether (meth)acrylate oligomers include, but are not limited to, the condensation reaction products of acrylic or methacrylic acid or synthetic equivalents or mixtures thereof with polyetherols which are polyether polyols (such as polyethylene glycol, polypropylene glycol or polytetramethylene glycol). Suitable polyetherols can be linear or branched substances containing ether bonds and terminal hydroxyl groups. Polyetherols can be prepared by ring opening polymerization of cyclic ethers such as tetrahydrofuran or alkylene oxides (e.g., ethylene oxide and/or propylene oxide) with a starter molecule. Suitable starter molecules include water, polyhydroxyl functional materials, polyester polyols and amines.

Polyurethane (meth)acrylate oligomers (sometimes also referred to as "urethane (meth)acrylate oligomers") suitable for use in the curable compositions of the present invention include urethanes based on aliphatic, cycloaliphatic and/or aromatic polyester polyols and polyether polyols and aliphatic, cycloaliphatic and/or aromatic polyester diisocyanates and polyether diisocyanates capped with (meth)acrylate end-groups. Suitable polyurethane (meth)acrylate oligomers include, for example, aliphatic polyester-based urethane di- and tetra-acrylate oligomers, aliphatic polyether-based urethane di- and tetra-acrylate oligomers, as well as aliphatic polyester/polyether-based urethane di- and tetra-acrylate oligomers.

The polyurethane (meth)acrylate oligomers may be prepared by reacting aliphatic, cycloaliphatic and/or aromatic polyisocyanates (e.g., diisocyanate, triisocyanate) with OH group terminated polyester polyols, polyether polyols, polycarbonate polyols, polycaprolactone polyols, polyorganosiloxane polyols (e.g., polydimethylsiloxane polyols), or polydiene polyols (e.g., polybutadiene polyols), or combinations thereof to form isocyanate-functionalized oligomers which are then reacted with hydroxyl-functionalized (meth)acrylates such as hydroxyethyl acrylate or hydroxyethyl methacrylate to provide terminal (meth)acrylate groups. For example, the polyurethane (meth)acrylate oligomers may contain two, three, four or more (meth)acrylate functional groups per molecule. Other orders of addition may also be practiced to prepare the polyurethane (meth)acrylate, as is known in the art. For example, the hydroxyl-functionalized (meth)acrylate may be first reacted with a polyisocyanate to obtain an isocyanate-functionalized (meth)acrylate, which may then be reacted with an OH group terminated polyester polyol, polyether polyol, polycarbonate polyol, polycaprolactone polyol, polydimethysiloxane polyol, polybutadiene polyol, or a combination thereof. In yet another embodiment, a polyisocyanate may be first reacted with a polyol, including any of the aforementioned types of polyols, to obtain an isocyanate-functionalized polyol, which is thereafter reacted with a hydroxyl-functionalized (meth)acrylate to yield a polyurethane (meth)acrylate. Alternatively, all the components may be combined and reacted at the same time.

Suitable acrylic (meth)acrylate oligomers (sometimes also referred to in the art as "acrylic oligomers") include oligomers which may be described as substances having an oligomeric acrylic backbone which is functionalized with one or (meth)acrylate groups (which may be at a terminus of the oligomer or pendant to the acrylic backbone). The acrylic backbone may be a homopolymer, random copolymer or block copolymer comprised of repeating units of acrylic monomers. The acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. Acrylic (meth)acrylate oligomers may be prepared using any procedures known in the art, such as by oligomerizing monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acrylate-containing reactants to introduce the desired (meth)acrylate functional groups.

Any of the above-mentioned types of oligomers may be modified with amines or sulfides (e.g., thiols), following procedures known in the art. Such amine- and sulfide-modified oligomers may be prepared, for example, by reacting a relatively small portion (e.g., 2-15%) of the (meth)acrylate functional groups present in the base oligomer with an amine (e.g., a secondary amine) or a sulfide (e.g., a thiol), wherein the modifying compound adds to the carbon-carbon double bond of the (meth)acrylate in a Michael addition reaction.

The curable composition of the invention may comprise 10 to 80%, in particular 15 to 75%, more particularly 20 to 70%, by weight of (meth)acrylate-functionalized oligomer based on the total weight of the curable composition.

In one embodiment, the ethylenically unsaturated compound comprises a hydrophilic monomer such as (meth)acrylic acid, (meth)acrylamide, a hydroxylated (meth)acrylate or a PEG-based (meth)acrylate; and a crosslinker such as a multifunctional (meth)acrylate.

Compositions comprising such a combination of ethylenically unsaturated compound may be particularly well suited for obtaining hydrogels, for example by using a 3D printing/stereolithograpy (SLA) process as described below.

The curable composition of the invention may further comprise a cationically polymerizable compound. The composition of the invention may comprise a mixture of cationically polymerizable compounds.

When the composition comprises a cationically polymerizable compound, the composition may be a hybrid free-radical/cationic composition, i.e. a composition that is cure by free radical polymerization and cationic polymerization.

The term "cationically polymerizable compound" means a compound comprising a polymerizing functional group which polymerizes via a cationic mechanism, for example a heterocyclic group or a carbon-carbon double bond substituted with an electrodonating group. In a cationic polymerization mechanism, a cationic initiator transfers charge to the cationically polymerizable compound which then becomes reactive and leads to chain growth by reaction with another cationically polymerizable compound.

The cationically polymerizable compound may be selected from epoxy-functionalized compounds, oxetanes, oxolanes, cyclic acetals, cyclic lactones, thiiranes, thiethanes, spiro orthoesters, ethylenically unsaturated compounds other than (meth)acrylates, derivatives thereof and mixtures thereof.

In a preferred embodiment, the cationically polymerizable compound may be selected from epoxy-functionalized compounds, oxetanes and mixtures thereof, in particular aromatic epoxy-functionalized compounds, cycloaliphatic epoxy-functionalized compounds, oxetanes and mixtures thereof.

Suitable epoxy-functionalized compounds capable of being cationically polymerized are glycidyl ethers, in particular mono-, di-, tri- and polyglycidyl ether compounds, and alicyclic ether compounds including those comprising residue of carboxylic acids such as, for example, alkylcarboxylic acid residual groups, alkylcycloalkylcarboxylic acid residual groups and dialkyl dicarboxylic acid residual groups. For example, the epoxy-functionalized compounds may be bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate, 3,4-epoxy-6-methylcyclohexyl-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), epoxyhexahydrodioctylphthalate, epoxyhexahydro-di-2-ethylhexyl phthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of polyether polyol obtained by the addition of one or more alkylene oxides to aliphatic polyhydric alcohols such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

Suitable oxetanes capable of being cationically polymerized include trimethylene oxide, 3,3-dimethyloxetane, 3,3-dichloromethyloxetane, 3-ethyl-3-phenoxymethyloxetane, and bis(3-ethyl-3-methyloxy)butane, 3-ethyl-3-oxetanemethanol.

Suitable oxolanes capable of being cationically polymerized include tetrahydrofuran and 2,3-dimethyltetrahydrofuran.

Suitable cyclic acetals capable of being cationically polymerized include trioxane, 1,3-dioxolane, and 1,3,6-trioxanecyclooctane.

Suitable cyclic lactones capable of being cationically polymerized include β-propiolactone and ε-caprolactone.

Suitable thiiranes capable of being cationically polymerized include ethylene sulfide, 1,2-propylene sulfide, and thioepichlorohydrin.

Suitable thiethanes capable of being cationically polymerized include 3,3-dimethylthiethane.

Suitable spiro orthoesters capable of being cationically polymerized are compounds obtained by the reaction of an epoxy compound and a lactone.

Suitable ethylenically unsaturated compounds other than (meth)acrylates capable of being cationically polymerized include vinyl ethers such as ethylene glycol divinyl ether, triethylene glycol divinyl ether and trimethylolpropane trivinyl ether; aliphatic vinyl monomers such as vinylcyclohexane; olefins such isobutylene; dienes such as butadiene; vinyl alkyl ethers; vinyl aromatic monomers such as styrene and alkylstyrenes; unsaturated polymers such as polybutadiene; derivatives of the above organic substances; and the like, at least some of which may also be polymerizable by free radical mechanisms.

When the composition comprises a cationically polymerizable compound, a cationic photoinitiator may also advantageously be present.

Suitable cationic photoinitiators include any type of photoinitiator that, upon exposure to radiation such as actinic radiation, forms cations (e.g., Bronsted or Lewis acids) that initiate the reaction of the monomeric and (if present) oligomeric cationically polymerizing organic substances in the curable composition. For example, a cationic photoinitiator may be comprised of a cationic portion and an anionic portion. The cationic portion of the photoinitiator molecule can be responsible for the absorption of UV radiation while the anionic portion of the molecule becomes a strong acid after UV absorption.

In particular, the cationic photoinitiator may be selected from onium salts with anions of weak nucleophilicity, such as halonium salts, iodonium salts (e.g., diaryliodonium salts such as bis(4-t-butylphenyl) iodonium perfluoro-1-butane sulfonate) or sulfonium salts (e.g., triarylsulfonium salts such as triarylsulfonium hexafluoroantimonate salts); sulfoxonium salts; diazonium salts; metallocene salts; and mixtures thereof.

The amount of cationic photoinitiator may be from 0% to 5%, in particular 0.1% to 3%, more particularly 0.5 to 2%, by weight based on the total weight of the curable composition.

### With an unsaturated polymer dispersion or emulsion

In a third aspect of the invention there is provided a radiation-curable composition comprising the emulsion of the invention and an unsaturated polymer dispersion or emulsion.

As used herein the term "unsaturated polymer dispersion or emulsion" means a dispersion or an emulsion comprising an ethylenically unsaturated polymer.

The unsaturated polymer dispersion or emulsion may be an aqueous polymer dispersion or emulsion. In one embodiment, the unsaturated polymer dispersion is a polyurethane dispersion (PUD), an acrylic dispersion and mixtures thereof, in particular a PUD. In one embodiment, the unsaturated polymer emulsion is an unsaturated polyester emulsion. In one embodiment, the unsaturated polymer emulsion is an emulsion of a (meth)acrylate-functionalized oligomer as defined above, in particular an emulsion of a (meth)acrylate-functionalized oligomer selected from a (meth)acrylate-functionalized urethane oligomer, a (meth)acrylate-functionalized epoxy oligomer, a (meth)acrylate-functionalized polyether oligomer, a (meth)acrylate-functionalized polydiene oligomer, a (meth)acrylate-functionalized polycarbonate oligomer, a (meth)acrylate-functionalized polyester oligomer and mixtures thereof.

The radiation-curable composition may comprise 1 to 40%, in particular 5 to 30%, more particularly 10 to 25%, by weight of the emulsion of the invention based on the weight of radiation-curable composition.

As used herein, the term "polyurethane dispersion" means a dispersion comprising a polyurethane polymer or a polyurethane copolymer such as a polyurethane-acrylate copolymer.

Polyurethane dispersions are typically produced by first forming a polyurethane pre-polymer, which comprises terminal groups, such as isocyanate (NCO) groups, which can undergo subsequent chain extension reactions. The polyurethane pre-polymer may be diluted with an organic solvent or a reactive diluent. The dilution advantageously reduces the viscosity of the prepolymer to facilitate its subsequent dispersion in water. The pre-polymer can undergo a chain-extension reaction prior to or after dispersion in water to increase the length of the polymer chain and/or add additional functionality to the polyurethane.

In one embodiment, the polyurethane dispersion comprises a polyurethane polymer and optionally a reactive diluent. The polyurethane polymer may bear ethylenically unsaturated groups. The polyurethane polymer may be formed by chain extending at least one isocyanate-terminated ethylenically unsaturated polyurethane pre-polymer (P), with a chain extender (E) bearing at least 2 isocyanate-reactive groups.

Pre-polymer (P) may be formed by reacting:
(A) one or more isocyanate reactive components containing at least one ethylenic unsaturation, preferably chosen from active hydrogen-containing (meth)acrylates ;
(B) one or more polyisocyanates, preferably diisocyanates ;
(C) one or more isocyanate reactive components containing ionic groups, potentially ionic groups or hydrophilic ether groups, preferably ionic groups derived from acidic groups, in particular with said component (C) bearing two isocyanate reactive groups, more particularly bearing two OH groups ; and
(D) optionally, one or more isocyanate reactive components other than component (A) or component (C), preferably bearing two isocyanate reactive groups, in particular OH, such that the mole ratios of components (A), (B), (C) and (D) result in a polyurethane pre-polymer comprising terminal isocyanate groups.

Component (A) may be a polyol component comprising (A1) a monoalcohol bearing at least 1, preferably from 1 to 5 (meth)acrylate groups and optionally (A2) a diol bearing at least 1, preferably from 1 to 4 (meth)acrylate groups. Component (A) containing ethylenic unsaturation may be chosen from polyester (meth)acrylates, epoxy (meth)acrylates, polyether (meth)acrylates, urethane (meth)acrylates, hydroxy-bearing (meth)acrylates (such as, for example partial (meth)acrylic esters of alkylene polyols which may be alkoxylated or partial (meth)acrylic esters of polyols resulting from di-polyol ethers of said alkylene polyols) and combinations thereof.

Component (C) may be a diol bearing an acidic group and salts thereof. The acidic group may be chosen from a carboxylic acid (-COOH) group, a carboxylate (-COO-) group, a phosphonic acid (-P(=O)(OH)₂) group, a phosphonate (-P(=O)(OR)₂) group, a sulfonic acid (-S(=O)₂OH) group, a sulfonate (-S(=O)₂OR) group, a phosphate (-O-P(=O)(OR)₂) group , wherein each R is independently a counterion, a hydrogen atom, or an optionally substituted hydrocarbyl.

Component (D) may be a monomeric or oligomeric monoalcohol or polyol, preferably a diol. More particularly, component (D) is oligomeric such as polyether or polyester diol.

Chain extender (E) may be selected from polyols and/or polyamines, more preferably from diols and/or diamines, even more preferably from diamines.

The reactive diluent (F) may be a compound having one or more ethylenically unsaturated groups that may be used as a diluent in the preparation of the polyurethane pre-polymer and to dilute the polyurethane pre-polymer during the formation of the polyurethane dispersion. It may react by free radical reaction with the acrylate groups on dispersed polyurethane during the actinic radiation curing step. The reactive diluent, when added to the polyurethane pre-polymer, can be used to control the viscosity of the polyurethane pre-polymer. Reactive diluent (F) may represent from about 10% to about 90%, preferably from 10 to 50% by weight relative to the solids content of the dispersion.

In another embodiment, the polyurethane dispersion may be a dispersion comprising a polyurethane-acrylate copolymer (also referred to as a PUA dispersion). The polyurethane-acrylate copolymer may be obtained by reacting the isocyanate-terminated ethylenically unsaturated polyurethane pre-polymer (P) as defined above with (meth)acrylate monomers, such as esters of (meth)acrylic acid with mono alcohols having 1 to 20, preferably 4 to 12 carbon atoms.

As used herein, the term "acrylic dispersion" means a dispersion comprising an acrylic polymer or an acrylic copolymer. The acrylic polymer or copolymer comprises residual ethylenically unsaturations.

As used herein, the term "unsaturated polyester emulsion" means an emulsion comprising an unsaturated polyester.

As used herein, the term "emulsion of a (meth)acrylate-functionalized oligomer" means an emulsion comprising a (meth)acrylate-functionalized oligomer.

The emulsion of a (meth)acrylate-functionalized oligomer may be obtained by emulsifying one or more (meth)acrylate-functionalized oligomers in water with a surfactant, in particular a polymeric amphiphilic surfactant (protective colloid).

### Common features between the compositions of the second and third aspect

The curable composition of the present invention may comprise an additive. The curable composition may comprise a mixture of additives.

In particular, the additive may be selected from sensitizers, amine synergists, antioxidants/photostabilizers, light blockers/absorbers, polymerization inhibitors, foam inhibitors, flow or leveling agents, colorants, pigments, dispersants (wetting agents, surfactants), slip additives, fillers, chain transfer agents, thixotropic agents, matting agents, impact modifiers, waxes, mixtures thereof, and any other additives conventionally used in the coating, sealant, adhesive, molding, 3D printing or ink arts.

The curable composition may comprise a sensitizer and/or an amine synergist.

Sensitizers may be introduced in the curable composition of the present invention in order to extend the sensitivity of the photoinitiator to longer wavelengths. For example, the sensitizer may absorb light at longer or shorter wavelengths than the photoinitiator and be capable of transferring the energy to the photoinitiator and revert to its ground state.

Examples of suitable sensitizers include benzophenones, anthracenes, thioxanthones (2-isopropylthioxanthone, 2,4-diethylthioxanthone, 1-chloro-4-propoxythioxanthone), xanthones, anthrones, anthraquinones (2-ethyl anthraquinone), dibenzosuberone and carbazoles.

The concentration of sensitizer in the curable composition will vary depending on the photoinitiator that is used. Typically, however, the curable composition is formulated to comprise from 0% to 5%, in particular 0.1% to 3%, more particularly 0.5 to 2%, by weight of sensitizer based on the total weight of the curable composition.

Amine synergists may be introduced in the curable composition of the present invention in order to act synergistically with Norrish Type II photoinitiators and/or to reduce oxygen inhibition. Amine synergists are typically tertiary amines. When used in conjunction with Norrish Type II photoinitiators, the tertiary amine provides an active hydrogen donor site for the excited triple state of the photoinitiator, thus producing a reactive alkyl-amino radical which can subsequently initiate polymerization. Tertiary amines are also able to convert unreactive peroxy species, formed by reaction between oxygen and free radicals, to reactive alkyl-amino radicals, thus reducing the effects of oxygen on curing.

Examples of suitable amine synergists include low-molecular weight tertiary amines (i.e. having a molecular weight of less than 200 g/mol) such as triethanol amine, N-methyldiethanol amine. Other types of amine synergists are aminobenzoates or amine-modified acrylates (acrylated amines formed by Michael addition of secondary amines on part of the acrylate groups carried by acrylate functionalized monomers and/or oligomers). Examples of aminobenzoates include ethyl-4-(N,N'-dimethylamino) benzoate (EDB), 2-n-butoxyethyl 4-(dimethylamino) benzoate (BEDB). Examples of commercially available amine-modified acrylate oligomers include CN3705, CN3715, CN3755, CN381 and CN386, all available from Arkema. Polymeric or multi-amino versions are also suitable.

The concentration of amine synergist in the curable composition will vary depending on the type of compound that is used. Typically, however, the curable composition is formulated to comprise from 0% to 25%, in particular 0.1% to 10%, more particularly 0.5 to 5%, by weight of amine synergist based on the total weight of the curable composition.

The curable composition may comprise a stabilizer.

Stabilizers may be introduced in the curable composition of the present invention in order to provide adequate storage stability and shelf life. Advantageously, one or more such stabilizers are present at each stage of the method used to prepare the curable composition, to protect against unwanted reactions during processing of the ethylenically unsaturated components of the curable composition. As used herein, the term "stabilizer" means a compound or substance which retards or prevents reaction or curing of actinically-curable functional groups present in a composition in the absence of actinic radiation. However, it will be advantageous to select an amount and type of stabilizer such that the composition remains capable of being cured when exposed to actinic radiation (that is, the stabilizer does not prevent radiation curing of the composition). Typically, effective stabilizers for purposes of the present invention will be classified as free radical stabilizers (i.e., stabilizers which function by inhibiting free radical reactions).

Any of the stabilizers known in the art related to (meth)acrylate-functionalized compounds may be utilized in the present invention. Quinones represent a particularly preferred type of stabilizer which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable stabilizer which can be utilized. Other stabilizers known in the art such as BHT and derivatives, phosphite compounds, phenothiazine (PTZ), triphenyl antimony and tin(II) salts can also be used.

The concentration of stabilizer in the curable composition will vary depending upon the particular stabilizer or combination of stabilizers selected for use and also on the degree of stabilization desired and the susceptibility of components in the curable compositions towards degradation in the absence of stabilizer. Typically, however, the curable composition is formulated to comprise from 5 to 5000 ppm stabilizer. According to certain embodiments of the invention, the reaction mixture during each stage of the method employed to make the curable composition contains at least some stabilizer, e.g., at least 10 ppm stabilizer.

The curable composition may comprise a light blocker (sometimes referred to as a light absorber).

The introduction of a light blocker is particularly advantageous when the curable composition is to be used as a resin in a three-dimensional printing process involving photocuring of the curable composition. The light blocker may be any such substances known in the three-dimensional printing art, including for example non-reactive pigments and dyes. The light blocker may be a visible light blocker or a UV light blocker, for example. Examples of suitable light blockers include, but are not limited to, titanium dioxide, carbon black and organic ultraviolet light absorbers such as hydroxybenzophenone, hydroxyphenylbenzotriazole, oxanilide, hydroxyphenyltriazine, Sudan I, bromothymol blue, 2,2'-(2,5-thiophenediyl)bis(5-tert-butylbenzoxazole) (sold under the brand name "Benetex OB Plus") and benzotriazole ultraviolet light absorbers.

The amount of light blocker may be varied as may be desired or appropriate for particular applications. Generally speaking, if the curable composition contains a light blocker, it is present in a concentration of from 0.001 to 10 % by weight based on the weight of the curable composition.

Advantageously, the curable compositions of the present invention may be formulated to be solvent-free, i.e., free of any non-reactive volatile substances (substances having a boiling point at atmospheric pressure of 150°C or less). For example, the curable compositions of the present invention may contain little or no non-reactive solvent, e.g., less than 10% or less than 5% or less than 1% or even 0% non-reactive solvent, based on the total weight of the curable composition. As used herein, the term non-reactive solvent means a solvent that does not react when exposed to the actinic radiation used to cure the curable compositions described herein.

According to other advantageous embodiments of the invention, the curable composition is formulated to be useable as a one component or one part system. That is, the curable composition is cured directly and is not combined with another component or second part (such as an amine monomer, as defined in U.S. Pat. Application Publication No. 2017/0260418 A1) prior to being cured.

In preferred embodiments of the invention, the curable composition is a liquid at 25°C. In various embodiments of the invention, the curable compositions described herein are formulated to have a viscosity of less than 10,000 mPa.s (cP), or less than 5,000 mPa.s (cP), or less than 4,000 mPa.s (cP), or less than 3,000 mPa.s (cP), or less than 2,500 mPa.s (cP), or less than 2,000 mPa.s (cP), or less than 1,500 mPa.s (cP), or less than 1,000 mPa.s (cP) or even less than 500 mPa.s (cP) as measured at 25°C using a Brookfield viscometer, model DV-II, using a 27 spindle (with the spindle speed varying typically between 20 and 200 rpm, depending on viscosity). In advantageous embodiments of the invention, the viscosity of the curable composition is from 200 to 5,000 mPa.s (cP), or from 200 to 2,000 mPa.s (cP), or from 200 to 1,500 mPa.s (cP), or from 200 to 1,000 mPa.s (cP) at 25°C. Relatively high viscosities can provide satisfactory performance in applications where the curable composition is heated above 25°C, such as in three-dimensional printing operations or the like which employ machines having heated resin vats.

The curable compositions described herein may be compositions that are to be subjected to curing by means of free radical polymerization, cationic polymerization or other types of polymerization. In particular embodiments, the curable compositions are photocured (i.e., cured by exposure to actinic radiation such as light, in particular visible or UV light).

The curable composition of the invention may advantageously be water-based. Indeed, aqueous (water-based) systems derive the greatest benefit from the incorporation of the emulsion of the invention.

The curable composition of the invention may be an ink, coating, sealant, adhesive, molding, or 3D printing composition, in particular a 3D-printing composition.

End use applications for the curable compositions include, but are not limited to, inks, coatings, adhesives, additive manufacturing resins (such as 3D printing resins), molding resins, sealants, composites, antistatic layers, electronic applications, recyclable materials, smart materials capable of detecting and responding to stimuli, packaging materials, personal care articles, articles for use in agriculture, water or food processing, or animal husbandry, and biomedical materials. The curable compositions of the invention thus find utility in the production of biocompatible articles. Such articles may, for example, exhibit high biocompatibility, low cytotoxicity and/or low extractables.

The composition according to the invention may, in particular, be used to obtain a cured product and a 3D printed article according to the following processes.

### Process for the preparation of a cured product and a 3D-printed article

The process for the preparation of a cured product according to the invention comprises curing the composition of the invention. In particular, the composition may be cured by exposing the composition to radiation. More particularly, the composition may be cured by exposing the composition to UV, near-UV, visible, infrared and/or near-infrared radiation or to an electron beam.

Curing may be accelerated or facilitated by supplying energy to the curable composition, such as by heating the curable composition. Thus, the cured product may be deemed the reaction product of the curable composition, formed by curing. A curable composition may be partially cured by exposure to actinic radiation, with further curing being achieved by heating the partially cured article. For example, an article formed from the curable composition (e.g., a 3D printed article) may be heated at a temperature of from 40°C to 120°C for a period of time of from 5 minutes to 12 hours.

Prior to curing, the curable composition may be applied to a substrate surface in any known conventional manner, for example, by spraying, knife coating, roller coating, casting, drum coating, dipping, and the like and combinations thereof. Indirect application using a transfer process may also be used. The substrate may be any commercially relevant substrate, such as metal, paper, cardboard, glass, plastic material, composite, wood, leather, ceramics, masonry, and combinations thereof. Advantageously, the substrate may be a wooden surface. Indeed, the compositions of the invention have an excellent sealing and hardening effect on wood, improving its durability.

When used as an adhesive, the curable composition may be placed between two substrates and then cured, the cured composition thereby bonding the substrates together to provide an adhered article. Curable compositions in accordance with the present invention may also be formed or cured in a bulk manner (e.g., the curable composition may be cast into a suitable mold and then cured).

The cured product obtained with the process of the invention may be coating, ink, lacquer, varnish, sealant, adhesive, molded article or 3D-printed article. In particular, the cured product may be a 3D-printed article.

The 3D-printed article may, in particular, be obtained with a process for the preparation of a 3D-printed article that comprises printing a 3D article with the composition of the invention. In particular, the process may comprise printing a 3D article layer by layer or continuously.

A plurality of layers of a curable composition in accordance with the present invention may be applied to a substrate surface; the plurality of layers may be simultaneously cured (by exposure to a single dose of radiation, for example) or each layer may be successively cured before application of an additional layer of the curable composition.

The curable compositions which are described herein can be used as resins in three-dimensional printing applications. Three-dimensional (3D) printing (also referred to as additive manufacturing) is a process in which a 3D digital model is manufactured by the accretion of construction material. The 3D printed object is created by utilizing the computer-aided design (CAD) data of an object through sequential construction of two dimensional (2D) layers or slices that correspond to cross-sections of 3D objects. Stereolithography (SL) is one type of additive manufacturing where a liquid resin is hardened by selective exposure to a radiation to form each 2D layer. The radiation can be in the form of electromagnetic waves or an electron beam. The most commonly applied energy source is ultraviolet, visible or infrared radiation.

Stereolithography and other photocurable 3D printing methods typically apply low intensity light sources to radiate each layer of a photocurable resin to form the desired article. As a result, photocurable resin polymerization kinetics and the green strength of the printed article are important criteria if a particular photocurable resin will sufficiently polymerize (cure) when irradiated and have sufficient green strength to retain its integrity through the 3D printing process and post-processing.

The curable compositions of the invention are especially useful as 3D printing resin formulations, that is, compositions intended for use in manufacturing three-dimensional articles using 3D printing techniques. Such three-dimensional articles may be free-standing/self-supporting and may consist essentially of or consist of a composition in accordance with the present invention that has been cured. The three-dimensional article may also be a composite, comprising at least one component consisting essentially of or consisting of a cured composition as previously mentioned as well as at least one additional component comprised of one or more materials other than such a cured composition (for example, a metal component or a thermoplastic component or inorganic filler or fibrous reinforcement). The curable compositions of the present invention are particularly useful in digital light printing (DLP), although other types of three-dimensional (3D) printing methods may also be practiced using the inventive curable compositions (e.g., SLA, inkjet, multi-jet printing, piezoelectric printing, actinically-cured extrusion, and gel deposition printing). The curable compositions of the present invention may be used in a three-dimensional printing operation together with another material which functions as a scaffold or support for the article formed from the curable composition of the present invention.

Thus, the curable compositions of the present invention are useful in the practice of various types of three-dimensional fabrication or printing techniques, including methods in which construction of a three-dimensional object is performed in a step-wise or layer-by-layer manner. In such methods, layer formation may be performed by solidification (curing) of the curable composition under the action of exposure to radiation, such as visible, UV or other actinic irradiation. For example, new layers may be formed at the top surface of the growing object or at the bottom surface of the growing object. The curable compositions of the present invention may also be advantageously employed in methods for the production of three-dimensional objects by additive manufacturing wherein the method is carried out continuously. For example, the object may be produced from a liquid interface. Suitable methods of this type are sometimes referred to in the art as "continuous liquid interface (or interphase) product (or printing)" ("CLIP") methods. Such methods are described, for example, in WO 2014/126830; WO 2014/126834; WO 2014/126837; and Tumbleston et al., "Continuous Liquid Interface Production of 3D Objects," Science Vol. 347, Issue 6228, pp. 1349-1352 (March 20, 2015), the entire disclosure of which is incorporated herein by reference in its entirety for all purposes.

When stereolithography is conducted above an oxygen-permeable build window, the production of an article using a curable composition in accordance with the present invention may be enabled in a CLIP procedure by creating an oxygen-containing "dead zone" which is a thin uncured layer of the curable composition between the window and the surface of the cured article as it is being produced. In such a process, a curable composition is used in which curing (polymerization) is inhibited by the presence of molecular oxygen; such inhibition is typically observed, for example, in curable compositions which are capable of being cured by free radical mechanisms. The dead zone thickness which is desired may be maintained by selecting various control parameters such as photon flux and the optical and curing properties of the curable composition. The CLIP process proceeds by projecting a continuous sequence of actinic radiation (e.g., UV) images (which may be generated by a digitial light-processing imaging unit, for example) through an oxygen-permeable, actinic radiation- (e.g., UV-) transparent window below a bath of the curable composition maintained in liquid form. A liquid interface below the advancing (growing) article is maintained by the dead zone created above the window. The curing article is continuously drawn out of the curable composition bath above the dead zone, which may be replenished by feeding into the bath additional quantities of the curable composition to compensate for the amounts of curable composition being cured and incorporated into the growing article.

In another embodiment, the curable composition will be supplied by ejecting it from a printhead rather than supplying it from a vat. This type of process is commonly referred to as inkjet or multijet 3D printing. One or more UV curing sources mounted just behind the inkjet printhead cures the curable composition immediately after it is applied to the build surface substrate or to previously applied layers. Two or more printheads can be used in the process which allows application of different compositions to different areas of each layer. For example, compositions of different colors or different physical properties can be simultaneously applied to create 3D printed parts of varying composition. In a common usage, support materials - which are later removed during post-processing - are deposited at the same time as the compositions used to create the desired 3D printed part. The printheads can operate at temperatures from about 25°C up to about 100°C. Viscosities of the curable compositions are less than 30 mPa.s at the operating temperature of the printhead.

The process for the preparation of a 3D-printed article may comprise the steps of:
a) providing (e.g., coating) a first layer of a curable composition in accordance with the present invention onto a surface;
b) curing the first layer, at least partially, to provide a cured first layer;
c) providing (e.g., coating) a second layer of the curable composition onto the cured first layer;
d) curing the second layer, at least partially, to provide a cured second layer adhered to the cured first layer; and
e) repeating steps c) and d) a desired number of times to build up the three-dimensional article.

Although the curing steps may be carried out by any suitable means, which will in some cases be dependent upon the components present in the curable composition, in certain embodiments of the invention the curing is accomplished by exposing the layer to be cured to an effective amount of radiation, in particular actinic radiation (e.g., electron beam radiation, UV radiation, visible light, etc.). The three-dimensional article which is formed may be heated in order to effect thermal curing.

Accordingly, in various embodiments, the present invention provides a process comprising the steps of:
a) providing (e.g., coating) a first layer of a curable composition in accordance with the present invention and in liquid form onto a surface;
b) exposing the first layer imagewise to actinic radiation to form a first exposed imaged cross-section, wherein the radiation is of sufficient intensity and duration to cause at least partial curing of the layer in the exposed areas;
c) providing (e.g., coating) an additional layer of the curable composition onto the previously exposed imaged cross-section;
d) exposing the additional layer imagewise to actinic radiation to form an additional imaged cross-section, wherein the radiation is of sufficient intensity and duration to cause at least partial curing of the additional layer in the exposed areas and to cause adhesion of the additional layer to the previously exposed imaged cross-section;
e) repeating steps c) and d) a desired number of times to build up the three-dimensional article.

After the 3D article has been printed, it may be subjected to one or more post-processing steps. The post-processing steps can be selected from one or more of the following steps removal of any printed support structures, washing with water and/or organic solvents to remove residual resins, and post-curing using thermal treatment and/or actinic radiation either simultaneously or sequentially. The post-processing steps may be used to transform the freshly printed article into a finished, functional article ready to be used in its intended application.

The cured product and 3D-printed articles obtained with the processes of the invention are described herein after.

### Cured product and 3D-printed article

The cured product of the invention is obtained by curing the composition of the invention or according to the process of the invention.

The cured product may be a coating, ink, lacquer, varnish, sealant, adhesive, molded article or 3D printed article. In particular, the cured product may be a 3D-printed article.

### Process for the preparation of the composition

In a further aspect of the invention, there is provided a process of preparing a composition according to invention comprising dispersing an organic phase in an aqueous phase to form an emulsion, the organic phase comprising a liquid blend of phosphine oxide photoinitiators comprising a first phosphine oxide photoinitiator and a second phosphine oxide photoinitiator, the organic phase comprising at least 40%, in particular 50 to 100%, more particularly at least 55 to 90%, even more particularly 60 to 80%, by weight of phosphine oxide photoinitiators based on the weight of the organic phase; and combining the emulsion with one or more ethylenically unsaturated compounds or with an unsaturated polymer dispersion or emulsion.

When the emulsion of photoinitiators is mixed with an unsaturated polymer dispersion or emulsion, this method provides a stable blend, through a remarkably simple process and without the need for additional stabilising components.

### Use

The composition of the invention may be used, for the preparation of a coating, ink, lacquer, varnish, sealant, adhesive, molded article or 3D printed article.

Unless otherwise stated, each of the integers described may be used in combination with any other integer as would be understood by the person skilled in the art. Further, although all aspects of the invention preferably "comprise" the features described in relation to that aspect, it is specifically envisaged that they may "consist" or "consist essentially" of those features outlined in the claims. In addition, all terms, unless specifically defined herein, are intended to be given their commonly understood meaning in the art.

Further, in the discussion of the invention, unless stated to the contrary, the disclosure of alternative values for the upper or lower limit of the permitted range of a parameter, is to be construed as an implied statement that each intermediate value of said parameter, lying between the smaller and greater of the alternatives, is itself also disclosed as a possible value for the parameter.

In addition, unless otherwise stated, all numerical values appearing in this application are to be understood as being modified by the term "about".

In order that the invention may be more readily understood, it will be described further with reference to the figures and to the specific examples hereinafter.
Figure 1 is a graph comparing the relative surface curing speed of Emulsion A and Omnirad 819DW at concentrations of 1.0%, 2.5%, 5.0% and 10.0% by weight of Emulsion A or Omnirad 819DW in UCECOAT 2806 Resin (gray/left = Omnirad 819DW, hashed/right - Emulsion A);
Figure 2 is a graph comparing the relative depth curing speed of Emulsion A and Omnirad 819DW at concentrations of 1.0%, 2.5%, 5.0% and 10.0% by weight of Emulsion A or Omnirad 819DW in UCECOAT 2806 Resin (gray/left = Omnirad 819DW, hashed/right - Emulsion A);
Figure 3 is a photograph of UCECOAT 2806 with (a) 5 wt% Omnirad 819DW or (b) 5 wt% Emulsion A stored at 60 °C for 1 week;
Figure 4 is a photograph of UCECOAT 2806 with (a) 5 wt% Omnirad 819DW or (b) 5 wt% Emulsion A stored at 20 °C for 1 week;
Figure 5 is a graph comparing the surface and depth curing rates under a mercury lamp for a selection of emulsions as further defined in Table 1 (gray/left = surface cure, hashed/right = depth cure);
Figure 6 is a graph comparing the surface and depth curing rates under a 365 nm LED lamp for a selection of emulsions as further defined in Table 1 (gray/left = surface cure, hashed/right = depth cure) in UCECOAT 2806;
Figure 7 is a graph comparing the surface and depth curing rates under a 395 nm LED lamp for a selection of emulsions as further defined in Table 1 (gray/left = surface cure, hashed/right = depth cure) in UCECOAT 2806,
Figure 8 is a graph comparing the surface and depth curing rates under a 365 nm LED lamp for a selection of emulsions as further defined in Table 1 (gray/left = surface cure, hashed/right = depth cure) in UCECOAT 2805; and
Figure 9 is a graph comparing the surface and depth curing rates under a 395 nm LED lamp for a selection of emulsions as further defined in Table 1 (gray/left = surface cure, hashed/right = depth cure) in UCECOAT 2805.

### Examples

### Materials

**Emulsion A** was obtained by high shear mixing of the ingredients given in the following table (the wt% are based on the weight of the emulsion):

| ***Ingredients*** | ***wt%*** | ***CAS n°*** |
|---|---|---|
| SpeedCure TPO-L | 33.33 | 84434-11-7 |
| SpeedCure XKm | 6.66 | 1539267-56-5 |
| Xanthan gum | 0.3 | 11138-66-2 |
| Water | qsp 100 | 7732-18 |

**Emulsion** B was obtained by high shear mixing of the ingredients given in the following table (the wt% are based on the weight of the emulsion):

| ***Ingredients*** | ***wt%*** | ***CAS n°*** |
|---|---|---|
| SpeedCure TPO-L | 33.33 | 84434-11-7 |
| SpeedCure MBF | 6.66 | 15206-55-0 |
| Xanthan gum | 0.3 | 11138-66-2 |
| Water | qsp 100 | 7732-18 |

**Emulsion C** was obtained by high shear mixing of the ingredients given in the following table (the wt% are based on the weight of the emulsion):

| ***Ingredients*** | ***wt%*** | ***CAS*** |
|---|---|---|
| SpeedCure 73 | 33.33 | 7473-98-5 |
| SpeedCure XKm | 6.66 | 1539267-56-5 |
| Xanthan gum | 0.3 | 11138-66-2 |
| Water | qsp 100 | 7732-18 |

**Omnirad 819DW (IGM Resins)** is a market leading photoinitiator dispersion comprising bis(2,4,6-trimethylbenzoyl)-phenylphosphineoxide and alkali salts of carboxylic acid polymers, polyvinyl alcohol or a modified polyacrylate in deionised water. The bis(2,4,6-trimethylbenzoyl)-phenylphosphineoxide is a Type I photoinitiator, and the alkali salts act as dispersing stabilisers.
**UCECOAT 2805 (Allnex)** a low migration acrylated polyurethane dispersion in water. It has good elongation properties, and water compatible without an emulsifier.
**UCECOAT 2806 (Allnex)** a low migration acrylated polyurethane dispersion in water. It is very low in viscosity, has low surface tension and good water resolubility.
**Speedcure 73 (Lambson)** - 2-hydroxy-2-methyl-1-phenylpropanone, a liquid Norrish Type I photoinitiator.
**Speedcure MBF (Lambson)** - Methylbenzoylformate, a liquid Norrish Type II photoinitiator.

### Methodology

Various concentrations of Emulsion A and Omnirad 819DW were mixed with polyurethane-based resins to form homogeneous solution. A small amount of sample was coated on standard black and white paper (Leneta 3NT-31) with 12 µm thickness using a K hand coater. The substrate passed the mercury lamp on a belt at 10 m/min. Surface cure was checked by tack free and depth cure was checked by thumb twist. Colouring was checked and compared by the naked eye before and after curing.

### Example 1: Comparison of Emulsion A. with Omnirad 819DW

The curing performance of Emulsion A and Omnirad 819DW was tested in the PUD-based (polyurethane dispersion) resin system UCECOAT 2806 at various concentrations (1.0 wt%, 2.4 wt%, 5.0 wt% and 10.0 wt% of Emulsion A or Omnirad 819DW based on the weight of UCECOAT 2806) under a mercury lamp.

### Appearance

The concentration had no effect on the odour or visual appearance of the cured resin.

### Surface Curing

At low photoinitiator concentrations (1.0 wt%), Emulsion A shows similar surface curing performance to Omnirad 819DW. When increasing concentrations from 2.5 wt% to 10 wt%, Emulsion A exhibits faster curing speed than Omnirad 819DW. Further, Emulsion A was stable in the resin at 20°C and 60°C, whereas phase separation was observed from resins with Omnirad 819DW.

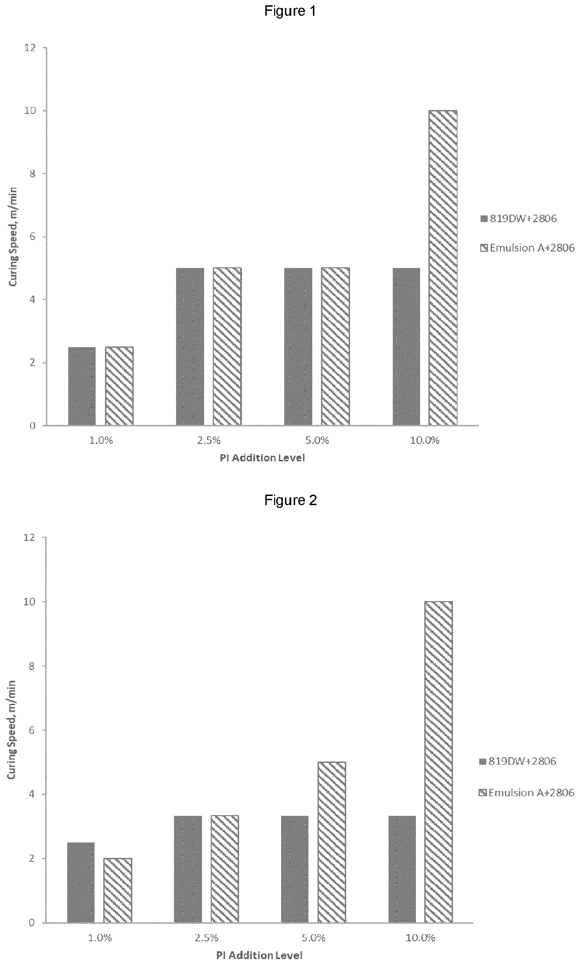

In Figure 1, Omnirad 819DW and Emulsion A show similar surface curing speed at 1-5% loading level. Increasing photoinitiator loading percent to 10%, Emulsion A cures twice faster than Omnirad 819DW.

Emulsion A was found to offer comparable resistance to rubbing (MEK double rubbing test) to Omnirad 819DW.

### Depth Curing

Figure 2 shows that, at levels of 1%, Emulsion A shows comparable depth curing speed to 1% Omnirad 819DW. However, increasing photoinitiator concentration from 1% to 10%, depth curing speed of Emulsion A increases significantly, from 2 m/min to 10 m/min. Both Emulsion A and Omnirad 819DW show the same depth curing speed at 2.5% loading level. At higher photoinitiator concentrations (5-10%), Emulsion A gives faster depth curing speed.

### Stability

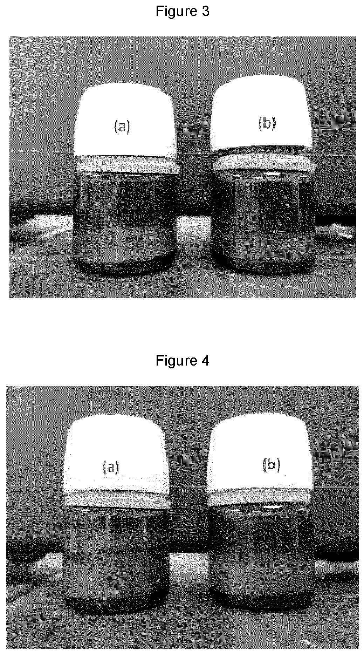

Emulsion A shows better stability in UCECOAT 2806 than Omnirad 819DW. UCECOAT 2806 combined with 5 wt% of Emulsion A or Omnirad 819DW was stored at 60 °C for 1 week in Amberglass Jars. There was no phase separation in the resin system with Emulsion A, whereas Omnirad 819DW was unstable, as is shown by the separation within the glass jars (see Figure 3). Similar results were observed for samples stored at 20 °C after a week. In Figure 4, the stability results show Emulsion A is more stable than Omnirad 819DW.

### Example 2: Comparison of Emulsion A. with other photoinitiator blends

Various photoinitiator emulsion systems were formulated (Table 1) to allow the comparison of curing performance of different photoinitiator emulsion systems in resin system UCECOAT 2806 or UCECOAT 2805. Photoinitiator system concentration (5 wt%), curing speed (10 m/min) and light source were controlled. After photopolymerization completed, samples were tested using MEK double rubbing.

**Table 1. Photoinitiator systems for curing performance test**

| **Photoinitiator systems** | |
|---|---|
| Emulsion A | Phosphine oxide Type I initiator with a phosphine oxide Type II initiator |
| Emulsion B | Phosphine oxide Type I initiator with a non-phosphine oxide Type II initiator |
| Emulsion C | Non-phosphine oxide Type I initiator with a phosphine Type II initiator |
| Omnirad 819DW | Phosphine oxide Type I initiator |

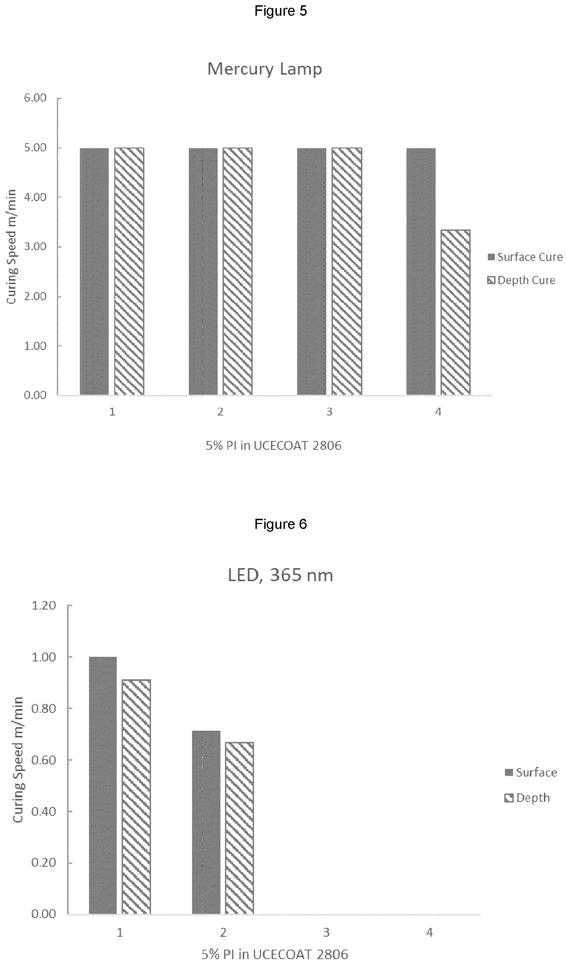

As discussed above, under mercury lamp curing, Omnirad 819DW shows slightly slower curing speed at depth cure. However, all other samples have similar curing speed at both surface cure and depth cure (Figure 5), and comparable performance in the MEK double rubbing tests.

This clearly illustrates the advantage of having a Norrish Type II phosphine oxide derivative present in the photoinitiator blend.

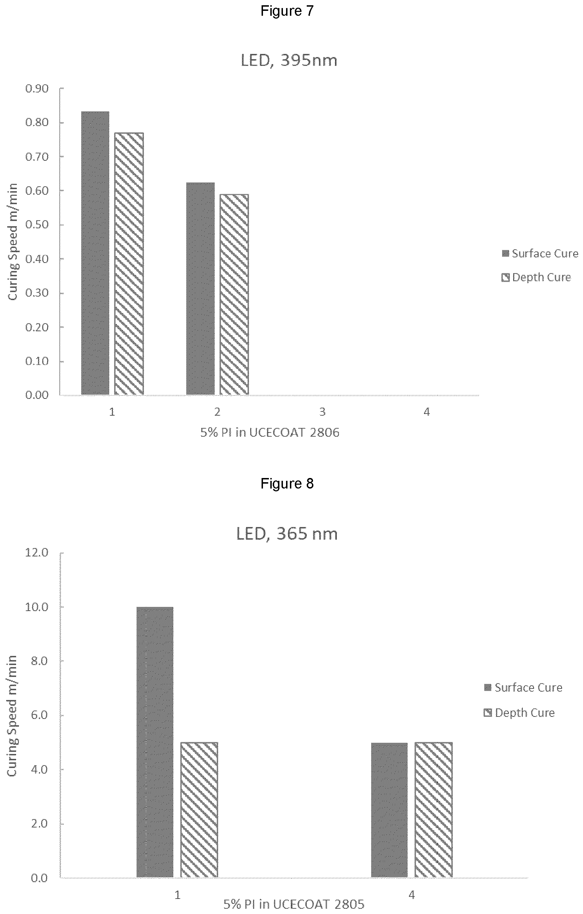

Figures 6 and 7 show surface and depth cure under a LED lamp (365 nm and 395 nm in UCECOAT 2806 respectively), Emulsion A cures faster than Emulsion B. Curing was stopped after 20 passes as the surface cure of Emulsion 3 and Omnirad 819DW was not fully complete (i.e. curing speed is slower than 0.5 m/min for both samples). Where effective curing was obtained, there were no differences for MEK double rubbing test results.

This shows that curing is retarded by the absence of the phosphine Type I initiator, as Emulsion A cured well, but Emulsion C did not. Further, the improved curing speed of Emulsion A relative to Emulsion B and Omnirad 819DW show the benefits of using a Type II phosphine oxide derivative as part of the photoinitiator blend.

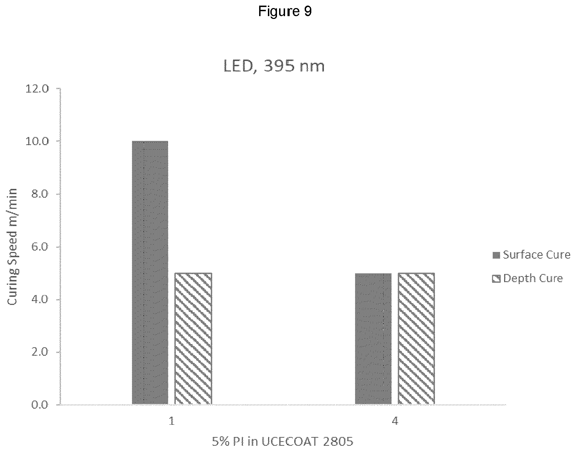

Figures 8 and 9 show that Emulsion A has a significantly faster surface cure than Omnirad 819DW which does not contain a phosphine type II initiator, yet retains comparable depth cure (365 nm and 395 nm in UCECOAT 2805 respectively).

In addition, the MEK rubbing performance was significantly better for Emulsion A in UCECOAT 2805 than Omnirad 819DW. At 365 nm the number of rubs required to penetrate the coating were twice that of emulsion 4, and at 395 nm three times the number of rubs were required to penetrate the coating.

The above results also show the well-known importance of light-source wavelength in photoinitiation.

It would be appreciated that the process and apparatus of the invention are capable of being implemented in a variety of ways, only a few of which have been illustrated and described above.

## Claims

1. An emulsion comprising an organic phase dispersed in an aqueous phase, the organic phase comprising a liquid blend of phosphine oxide photoinitiators comprising a first phosphine oxide photoinitiator and a second phosphine oxide photoinitiator, wherein the organic phase comprises at least 40%, in particular 50 to 100%, more particularly at least 55 to 90%, even more particularly 60 to 80%, by weight of phosphine oxide photoinitiators based on the weight of the organic phase.

2. The emulsion according to claim 1, which comprises at least 20%, in particular 22 to 60%, more particularly at least 25% to 55%, even more particularly 30 to 50%, by weight of phosphine oxide photoinitiators based on the weight of the emulsion.

3. The emulsion according to claim 1 or 2, wherein the first phosphine oxide photoinitiator has Norrish type I activity and/or Norrish type II activity, in particular Norrish type I activity.

4. The emulsion according to any of claims 1 to 3, wherein the second phosphine oxide photoinitiator has Norrish type I activity and/or Norrish type II activity, in particular Norrish type I activity and Norrish type II activity.

5. The emulsion according to any one of claims 1 to 4, wherein the first phosphine oxide photoinitiator is a mono-acyl phosphine oxide.

6. The emulsion according to any of claims 1 to 5, wherein the second phosphine oxide photoinitiator is selected from a mono-acyl phosphine oxide, a di-acyl phosphine oxide and mixtures thereof, in particular a mono-acyl phosphine oxide.

7. The emulsion according to any one of claims 1 to 6, wherein the first phosphine oxide photoinitiator has a phosphinate group.

8. The emulsion according to any of claims 1 to 7, wherein the second phosphine oxide photoinitiator has a phosphinate group.

9. The emulsion according to any one of claims 1 to 8, wherein the first phosphine oxide photoinitiator is represented by the following formula la: 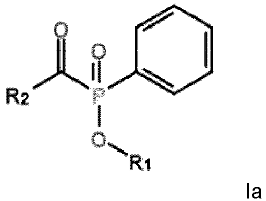 wherein R₁ is selected from a C₁-C₅ alkyl, and wherein R₂ comprises an aromatic group.

10. The emulsion according to claim 6, wherein R₁ is selected from methyl, ethyl and n-propyl.

11. The emulsion according to claim 6 or 7, wherein R₂ comprises a moiety having the following structure: 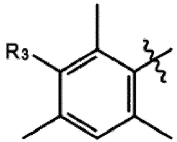 wherein R₃ is selected from hydrogen, a C₁-C₅ alkyl, and -CO-R₄ wherein R⁴ comprises a C₁-C₅ alkyl, phenyl or benzyl.

12. The emulsion according to any one of claims 1 to 8, wherein the first phosphine oxide photoinitiator is represented by the following formula II:

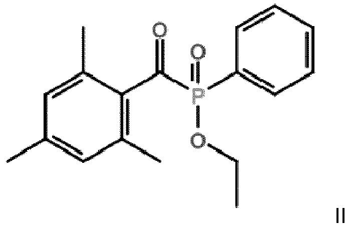

13. The emulsion according to any of claims 1 to 12, wherein the second phosphine oxide photoinitiator is represented by the following formula III: 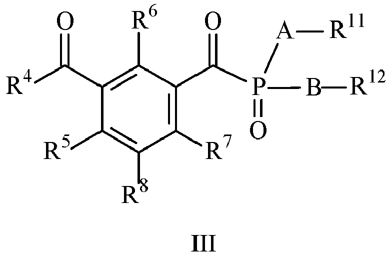 wherein
R⁴ is C₁₋₂₀ alkyl, C₇-C₂₀ alkylaryl or an optionally substituted phenyl or polyphenyl;
R⁵, R⁶, R⁷ and R⁸ are independently hydrogen, halogen, C₁₋₂₀ alkyl, -OR⁹ or CF₃ and two of radicals R⁵, R⁶, R⁷ and R⁸ may together form C₁₋₂₀ alkylene which can be interrupted by O, S or NR¹⁰;
R⁹ is hydrogen, C₁₋₂₀ alkyl, C₂₋₂₀ alkenyl, C₃-C₈ cycloalkyl, phenyl, benzyl or C₂₋₂₀ alkyl which is interrupted once or more than once by O or S and which is unsubstituted or is substituted by OH and/or SH;
R¹⁰ is hydrogen, phenyl, C₁₋₁₂ alkyl or C₂₋₁₂ alkyl which is interrupted once or more than once by O or S and which is unsubstituted or substituted by OH and/or SH;
R¹¹ and R¹² are independently an optionally substituted group selected from C₁-C₂₀ alkyl, C₁-C₂₀ alkoxy, C₂₋₂₀ alkenyl, C₃-C₈ cycloalkyl, C₆-C₁₂ aryl, C₇-C₂₀ alkylaryl and C₅-C₉ heteroaryl;
A and B are independently a bond, -(CH₂)ₙ- or -C(=O)-;
n is 1 to 10.

14. The emulsion according to claim 13, wherein
R⁴ is C₁₋₁₂ alkyl, benzyl or an optionally substituted phenyl;
R⁵, R⁶ and R⁷ are independently hydrogen, halogen, C₁₋₁₂ alkyl or C₁-C₁₂ alkoxy;
R⁸ is hydrogen;
R¹¹ and R¹² are independently C₁-C₁₂ alkyl, C₁-C₁₂ alkoxy or an optionally substituted phenyl;
A and B are independently a bond or -C(=O)-.

15. The emulsion according to claim 13, wherein
R⁴ is phenyl;
R⁵, R⁶ and R⁷ are independently hydrogen, CI, methyl or methoxy;
R⁸ is hydrogen;
-A-R¹¹ and -B-R¹² are independently phenyl, methoxy, ethoxy, trimethylpentyl or a group of formula IV: 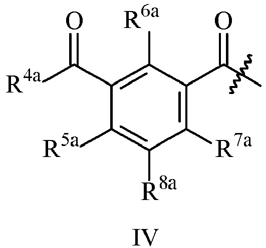 wherein
R^{4a}, R^{5a}, R^{6a}, R^{7a} and R^{8a} are respectively as defined for R⁴, R⁵, R⁶, R⁷ and R⁸ in any one of claims 12-14.

16. The emulsion according to any one of claims 1-15, wherein the second phosphine oxide photoinitiator is selected from one of the following compounds: 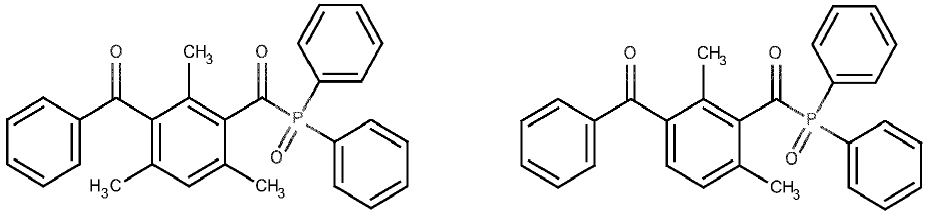 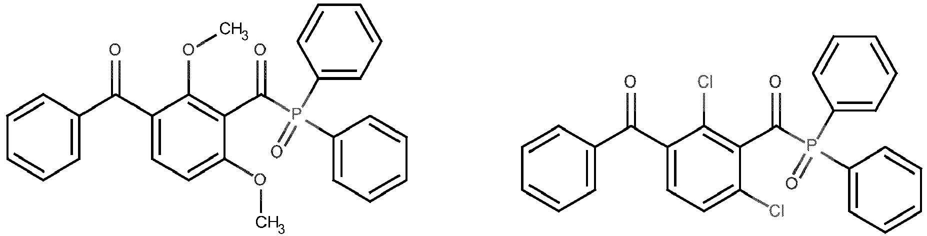 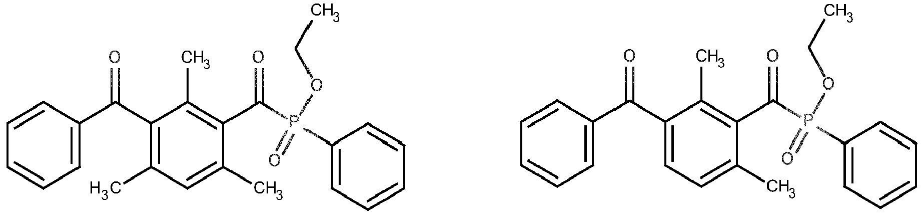 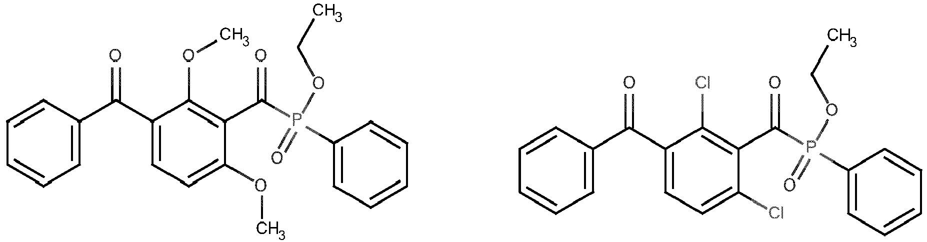 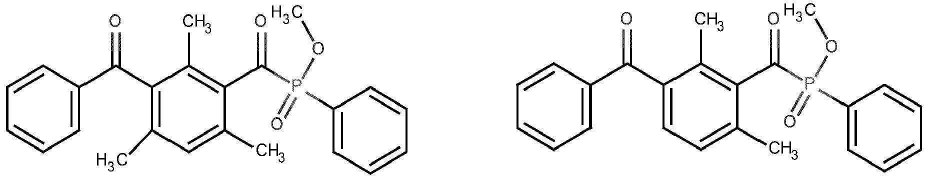 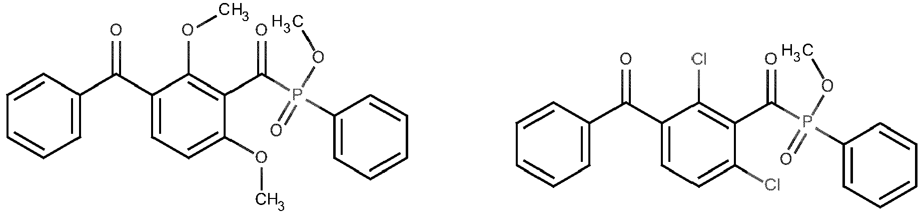 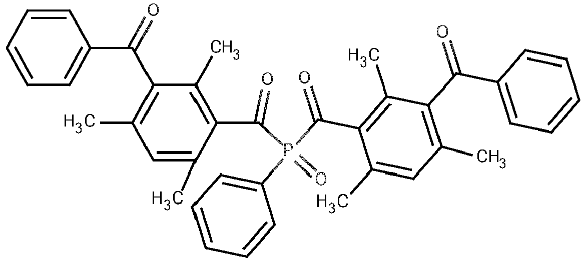 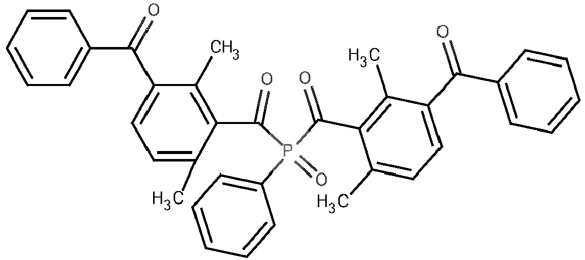 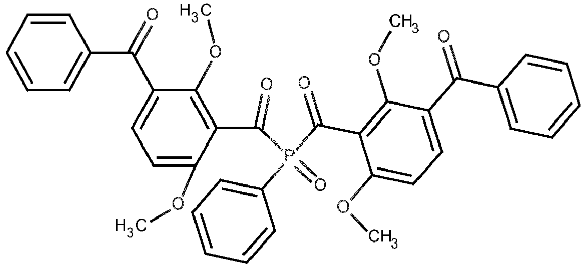 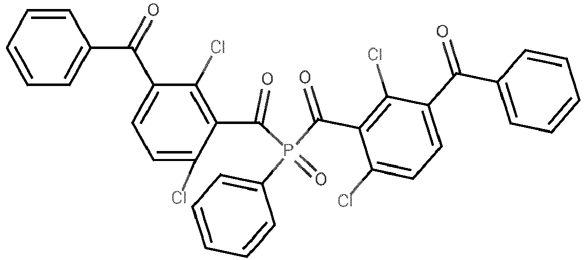 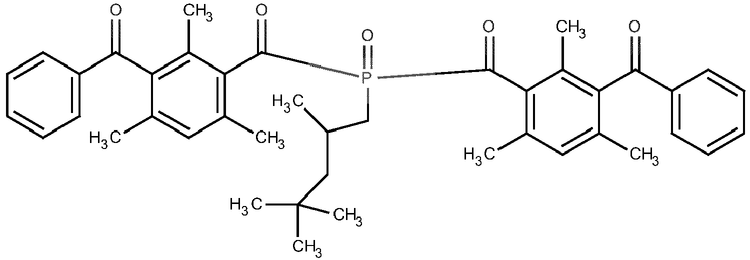 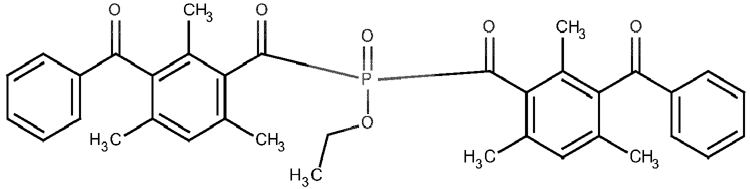 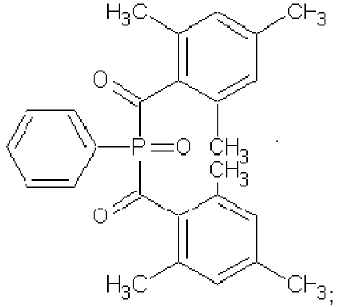 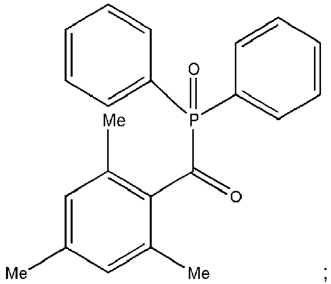 and mixtures thereof.

17. The emulsion according to any of claims 1 to 16, wherein the second phosphine oxide photoinitiator is a compound of formula V:

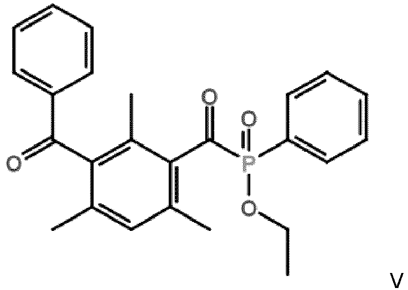

18. The emulsion according to any one of claims 1 to 17, wherein a weight ratio of the first phosphine oxide photoinitiator to the second phosphine oxide photoinitiator is in the range of 10:1 to 3:1, in particular 7:1 to 3:1, more particularly 11:2 to 9:2.

19. The emulsion according to any one of claims 1 to 18, further comprising a surfactant and optionally an additive, in particular an additive selected from a rheology modifier, a pH modifier and mixtures thereof.

20. A radiation-curable composition comprising the emulsion of any one of claims 1 to 19 and an ethylenically unsaturated compound.

21. A radiation-curable composition comprising the emulsion of any one of claims 1 to 19 and an unsaturated polymer dispersion or emulsion.

22. The radiation-curable composition according to claim 21, wherein the unsaturated polymer dispersion or emulsion is a polyurethane dispersion, an acrylic dispersion, an unsaturated polyester emulsion or an emulsion of a (meth)acrylate-functionalized oligomer and mixtures thereof, in particular the unsaturated polymer dispersion or emulsion is a polyurethane dispersion.

23. The radiation-curable composition according to any one of claims 20 to 22, which is water-based.

24. The radiation-curable composition according to any one of claims 20 to 23, which is a coating, ink, lacquer, varnish, sealant, adhesive, molding or 3D printing composition.

25. A process for the preparation of a cured product comprising curing the composition according to any one of claims 20 to 24, in particular by exposing the composition to radiation such as UV, near-UV, visible, infrared and/or near-infrared radiation or to an electron beam.

26. The process of claim 25, wherein the cured product is a coating, ink, lacquer, varnish, sealant, adhesive, molded article or 3D-printed article, in particular a 3D-printed article.

27. The method of claim 25 or 26, wherein the method is for the preparation of a 3D-printed article and the method comprises printing a 3D article with the composition according to any one of claims 20 to 24, in particular layer by layer or continuously.

28. A cured product obtained by curing the composition of any of claims 20 to 24.

29. The cured product according to claim 28, wherein the composition is cured on a surface.

30. The cured product according to claim 29, wherein the surface is a wooden surface.

31. The cured product according to any one of claims 28 to 30, wherein the cured product is an ink, a coating, a sealant, an adhesive, a molded article or a 3D-printed article, in particular a 3D-printed article.

32. A process of preparing a composition according to any of claims 20 to 24, comprising dispersing an organic phase in an aqueous phase to form an emulsion, the organic phase comprising a liquid blend of phosphine oxide photoinitiators comprising a first phosphine oxide photoinitiator and a second phosphine oxide photoinitiator, the organic phase comprising at least 40%, in particular 50 to 100%, more particularly at least 55 to 90%, even more particularly 60 to 80%, by weight of phosphine oxide photoinitiators based on the weight of the organic phase; and combining the emulsion with one or more ethylenically unsaturated compounds or with an unsaturated polymer dispersion or emulsion.

33. A use of a composition according to any of claims 20 to 24, for the preparation of a coating, ink, lacquer, varnish, sealant, adhesive, molded article or 3D printed article.
